# EUROPEAN PATENT SPECIFICATION

(11) **EP 2 471 293 B1**
(45) Date of publication and mention of the grant of the patent: **02.10.2019**
(21) Application number: 10812231.8
(22) Date of filing: 24.08.2010
(51) Int. Cl.: H04W 16/04, H04W 16/32

(54) **TECHNIQUES FOR INTERFERENCE MITIGATION IN MULTI-TIER COMMUNICATION SYSTEM**
VERFAHREN ZUR INTERFERENZUNTERDRÜCKUNG IN EINEM MEHRSCHICHTIGEN KOMMUNIKATIONSSYSTEM
TECHNIQUES PERMETTANT D'ATTÉNUER L'INTERFÉRENCE DANS UN SYSTÈME DE COMMUNICATION MULTINIVEAU

(30) Priority: 26.08.2009 US 237246 P; 26.08.2009 US 237260 P; 22.09.2009 US 277190 P; 13.11.2009 US 261211 P; 13.08.2010 US 856166
(43) Date of publication of application: 04.07.2012
(73) Proprietor: Samsung Electronics Co., Ltd., Suwon-si, Gyeonggi-do, 443-742 (KR)
(72) Inventor: LI, Ying, Garland, Texas 75044 (US); JI, Baowei, Plano, Texas 75024 (US); PI, Zhouyue, Richardson, Texas 75082 (US); SON, Jung-Je, Yongin-si Gyeonggi-do 446-567 (KR); BAEK, Young-Kyo, Seoul 152-889 (KR); RAMAKRISHNA, Sudhir, Plano, Texas 75082 (US)
(74) Representative: Grünecker Patent- und Rechtsanwälte PartG mbB
(86) International application number: PCT/KR2010/005633
(87) International publication number: WO 2011/025217

(56) References cited:
- EP-A1- 2 077 685
- CA-A1- 2 776 098
- KR-A- 20070 073 338
- KR-A- 20090 044 352
- US-A1- 2004 085 896
- US-A1- 2006 035 639
- US-A1- 2008 219 255
- US-A1- 2009 042 595
- US-A1- 2009 068 944
- US-A1- 2009 197 631
- MITSUBISHI ELECTRIC: "HeNBs and X2 interface", 3GPP DRAFT; R3-082476 (X2 FOR HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323765, [retrieved on 2008-09-24]

## Description

### Technical Field

The present invention relates to techniques for use in a multi-tier communication system. More particularly, the present invention relates to techniques for Interference Mitigation (IM) in a multi-tier communication system.

### Background Art

In a typical wireless communication system, a service, such as a voice and/or data service, is provided to Mobile Stations (MSs) through a plurality of Macrocell Base Stations (MBSs). An MS may also be referred to as an Advanced Mobile Station (AMS) and an MBS may also be referred to as a Macrocell Advanced Base Station (MABS). Each of the MBSs is responsible for providing a service to MSs located within their respective service coverage area. The service coverage area of an MBS is hereafter referred to as a Macrocell. To facilitate mobility of the MSs, handoff between MBSs is performed when the MS leaves one Macrocell for another.

In the wireless communication system, a channel may deteriorate due to a number of factors, including a geographical factor inside a Macrocell, a distance between an MS and an MBS, movement of the MS, etc. The channel deterioration is problematic since it may result in a disruption of communication between the MS and the MBS. For example, when the MS is located inside a structure, such as an office building or a house, a channel between the MBS and the MS may deteriorate due a shadow region that is formed by the structure. A shadow region formed within the structure is hereafter referred to as an indoor shadow region. The MS located in the indoor shadow region may not be able to adequately perform communication with the MBS. Further, an MBS may have inadequate capacity to service all users in its Macrocell. To address the shortcomings of the MBS, a variety of other Base Stations (BSs) have been proposed, including a Relay, Picocell, Microcell, Femtocell, Ubicell etc. The Femtocell concept, as an example of the cell overlaid by the Macrocell, will be explained further below.

The Femtocell concept is proposed to provide ubiquitous connectivity to MSs and improve wireless capacity, while addressing a service limitation of an indoor shadow region. A Femtocell is a small cell coverage area that is serviced by a low power Femtocell BS (FBS) that accesses a wireless communication Core Network (CN) via a commercial broadband network or via a wireless connection to a backhaul of the wireless communication system. Hereafter, the term "Femtocell" may be used interchangeably with the term "FBS." Also, an FBS may be referred to as a Femtocell Advanced Base Station (FABS). The deployment of the Femtocell improves both the coverage and capacity of the wireless communication system. Going forward, the advantages of the Femtocell are expected to be increasingly leveraged in wireless communication systems. Since the Femtocell is much smaller than a Macrocell, a plurality of Femtocells may coexist within one Macrocell. The FBS is capable of providing service to relatively a small number of MSs, unlike the MBS, which is capable of providing service to a large number of MSs. The FBS typically operates in a licensed spectrum and may use the same or different frequency as the MBS. Further, MSs serviced by an FBS are typically stationary or moving at low (i.e., pedestrian) speed. Similar to the need for handoff between MBSs, handoff between the Femtocell and the Macrocell, and handoff between Femtocells, is a key function in securing service continuity of an MS.

The FBS may be installed inside or adjacent to an indoor space to which it is intended to provide service, such as a home or Small Office/Home Office (SOHO). Installation of the FBS is significantly easier than installation of the MBS and the FBS may be purchased and installed by a subscriber for use in conjunction with the wireless communication system. Here, the subscriber or service provider may desire to limit access to the FBS and only provide access to authorized MSs. To facilitate this arrangement, a Closed Subscriber Group (CSG) FBS may be employed. The CSG FBS can be further categorized as a CSG-closed and a CSG-open FBS. A CSG-closed FBS may only provide access to authorized MSs, except for emergency services and National Security/Emergency Preparedness (NS/EP) services. A CSG-open FBS may, in addition, allow non-subscribers of the CSG a low priority access or a best-effort access, to guarantee the Quality of Service (QoS) of the subscribers. Alternatively, an Open Subscriber Group (OSG) FBS may be employed that provides access to any MS.

The FBS has different operational requirements than the MBS, the specifics of which may differ depending on the wireless communication system the FBS is implemented in. For example, in a wireless communication system operating according to the Institute of Electrical and Electronics Engineers (IEEE) 802.16m standard, it is required that the air interface support features needed to limit MSs scanning for FBSs. Further it is required that the air interface support MSs in being able to access and HandOver (HO) to CSG FBSs if they are designated as part of the CSG. In addition, it is required that the air interface support preferred access and HO of mobile stations to their designated FBSs. Also, it is required that the air interface support optimized and seamless session continuity and HO between FBSs and Wireless Fidelity (WiFi) access systems. Further, it is required that the air interface allows for a dense deployment of a large number of Femtocells in a wireless communication system.

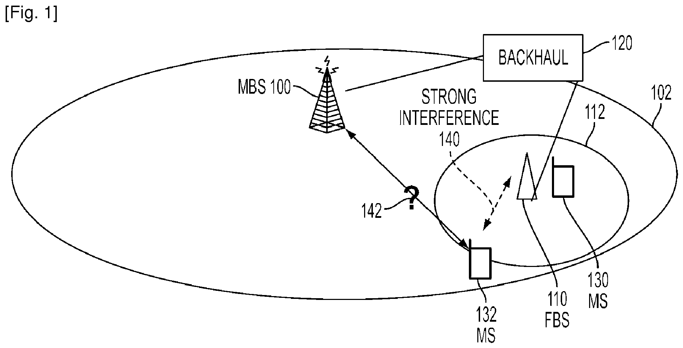

Given the above requirements for the Femtocell, which differ from the requirements of the Macrocell, there are a number of issues that arise with the deployment of the Femtocell in a wireless communication system. For example, when Femtocells are densely deployed, interference may be introduced from the Femtocells to Macrocells and to other Femtocells. This is particularly evident in the case of the CSG FBS, which only provides service to authorized MSs, an example of which is described below with reference to FIG. 1.

FIG. 1 illustrates an unauthorized MS receiving interference from a CSG FBS according the related art.

Referring to FIG. 1, MBS 100 services Macrocell 102. FBS 110 is located in Macrocell 102 and services Femtocell 112. FBS 110 is a CSG FBS. MBS 100 and FBS 110 may communicate with each other via a Backhaul 120. The Backhaul 120 may include at least one of a Self-Organizing Networks (SON) server and gateway which may coordinate the interference management among BSs. MS 130 is authorized to access FBS 110. MS 132 is not authorized to access FBS 110. As shown, MS 130 is receiving service from FBS 110 as MS 132 enters Femtocell 112. When MS 132 enters Femtocell 112, MS 132 receives a strong signal 140 from FBS 110. However, since MS 132 is unauthorized, the MS will not be able take advantage of the strong signal 140 of the FBS 110 for service. Instead, the signal ends up being strong interference to MS 132 thereby it may prevent MS 132 from receiving service from MBS 100 via link 142.

The interference caused by the strong signal 140 may be mitigated by static or semi-static radio resource reservation and resource sharing using at least one of Frequency Division Multiplexing (FDM) Time Division Multiplexing (TDM) and DownLink (DL) power control.

Consider the scenario where unauthorized MS 132 is connected and being served by MBS 100 as it encounters the strong signal 140. Here, the MS 132 may be requested by MBS 100 to report the signal strength measurement of neighbor BSs, such as FBS 110 and other MBSs and/or FBSs. The reported information may be used by MBS 100 to coordinate with its neighbor BSs, such as FBS 110, to mitigate the interference to MS 132.

Strong interference from an inaccessible FBS, such as FBS 110, may trigger MS 132 to report the interference to MBS 100, and the reported information should include system information on the inaccessible FBS (e.g., a BS IDentifier (BS_ID) of FBS 110). MBS 100 and/or the network may request the interfering FBS 110 to mitigate the interference by at least one of reducing transmission power and blocking a resource region. In order to enable the interference avoidance or mitigation schemes, FBS 110 should be capable of scanning the signals transmitted from neighbor BSs, including MBS 100.

As indicated above, interference between Femtocells and/or Macrocells may be mitigated by static or semi-static radio resource reservation and resource sharing using at least one of FDM, TDM, and DL power control. Herein, resource reservation should not interfere with the implementation of Fractional Frequency Resuse (FFR). Accordingly, FBSs should also utilize FFR partitions in the DL and UpLink (UL) using the same signaling and procedures as that used by the MBSs. FFR partitions used by the FBSs may be different in terms of size, subchannel assignment, and transmit power level than those used by MBSs. One or more FFR partitions may be used as the radio resource region where FBSs are not allowed to transmit. The blocked region size may increase if the number of MSs interfered by an FBS becomes larger. Likewise, the blocked region size may decrease if the number of MSs interfered by an FBS becomes smaller. An FBS may detect and reserve the resources autonomously, or in cooperation with the overlay MBS.

In contrast to the above described situation where MS 132 is connected with MBS 100 and has an active connection, consider the scenario where MS 132 is in an idle mode, or another mode in which MS 132 is not connected to MBS 100. At present, for the situation where the MS 132 is not connected with any BS, such as MBS 132, there a solution has not yet been developed on how to trigger inference mitigation and when the MS 132 should report the interference. Also there is a high probability that MS 132 may detect an interference that is larger than a threshold from FBS 110, which is an FBS the MS 132 is unauthorized to access. Such interference may prevent MS 132 from receiving the broadcast channel of other BSs, such as MBS 100, or MS 132 may not be able to decode the broadcast channel to determine where the ranging channel is allocated. In such cases, MS 132 cannot report on the interference to other BSs, such as MBS 132, and no solution to this problem has yet been developed.

Another issue that arises with the deployment of the Femtocell in a wireless communication system relates to security. Generally, authentication of an MS differs depending on whether the MS is serviced by an MBS.

When the MS is not being serviced by an MBS, a Cipher-based Message Authentication Code (CMAC) may not be needed in a RaNGing REQuest (RNG-REQ) to a FBS and the MS may enter an Extensible Authentication Protocol (EAP) process in order to be authenticated. Here, while one sub-message may be contained in a Privacy Key Management (PKM) message, many PKM message transactions are required for authentication. After EAP authentication, the FBS and the network know whether the MS is authorized for service. The FBS obtains an MS ID from the REG-REQ which the MS sent to the FBS in an encrypted manner. Further, if the FBS has the MS in its white list, the FBS can determine whether the MS is authorized. If FBS does not have the MS in its white list, the FBS may forward the MS ID to another server, e.g., a Femtocell Authentication, Authorization and Accounting (AAA) server, and request the server to determine whether the MS is authorized, or if the MS has subscribed to be serviced by this FBS.

When the MS is serviced by an MBS, the CMAC may be included in the RNG-REQ to the FBS and may be used for authentication. When the FBS possesses the CMAC, the FBS may determine whether the MS is authorized by acquiring an Authentication Key (AK) context from a serving anchor authenticator and verifying the CMAC. Here, the FBS may acquire the MS ID from the serving anchor authenticator. Further, if FBS has the MS in its white list, the FBS can determine whether the MS is authorized. If the FBS does not have the MS in its white list, the FBS may forward the MS ID to another server, e.g., Femtocell AAA server, and request the server to determine whether the MS is authorized.

However, the security procedures described above do not take Interference Mitigation (IM) into account. At present, security procedures that take IM into account have not been development, especially in the situation where an unauthorized MS is strongly interfered by a CSG-closed FBS such that the unauthorized MS is only capable of communicating with the CSG-closed FBS.

Another issue that arises with the deployment of the Femtocell in a wireless communication system relates to interference caused to preambles. An FBS uses different Orthogonal Frequency-Division Multiple Access (OFDMA) symbols for a Super Frame Header (SFH) in order to reduce interference among FBSs and/or MBSs.

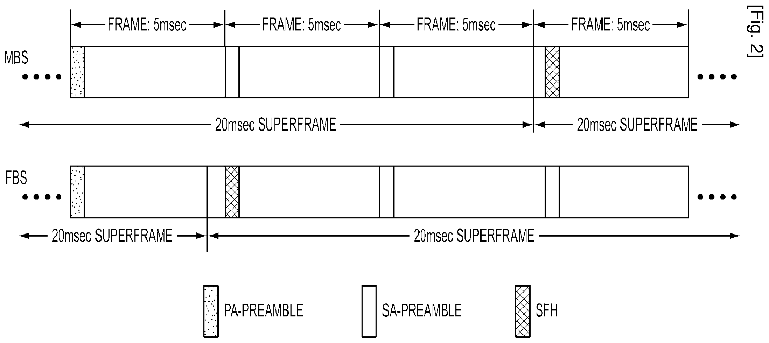

FIG. 2 illustrates the locations of SFHs in a frame structure used by FBSs and MBSs according to the related art.

Referring to FIG. 2, the SFH of an FBS is located in the first/second frames after a frame that includes a Primary Advanced (PA)-Preamble, and the SFH of an MBS is located in the third or greater frames after a Primary Advanced (PA)-Preamble. All PA-Preambles of FBSs and MBSs are aligned in the time domain and the SFH of FBSs and MBSs are located in a frame after a Secondary Advanced (SA)-Preamble.

However, in the approach described above with respect to FIG. 1, there is a possibility that data communication of an FBS could interfere with an MBS SFH, and there is a possibility that data communication of an MBS could interfere with an FBS SFH. When such interference occurs, the SFH of the MBS or the FBS may not be received or decoded by an MS. At present, a technique on how to mitigate the interference of preambles of FBSs and MBSs has not been developed.

As discussed above, there are three types of FBSs, namely an open FBS in which all MSs are authorized to access, a CSG-open FBS in which all MSs are authorized to access, but members have a higher priority and non-members can have best effort access, and a CSG-closed FBS in which only members are allowed to access.

Both open FBSs and CSG-open FBSs allow an MS to access the FBS. Thus, when the MS detects large interference from an FBS, it can HO to the FBS. However, if the FBS is a CSG-closed FBS, there will be an interference problem for the unauthorized MSs, since the unauthorized MSs cannot HO to a CSG-closed FBS. However, in the technique described above with respect to FIG. 2, all types of FBSs have the location of the SFH different than the MBS. As a result, the MS unnecessarily changes operations when it moves among open FBSs and MBSs because the SFH of MBS and the FBS are located in different frames. Also, this results in the open FBSs unnecessarily placing the SFH one/two frames after the PA-Preamble, not three frames after, which may weaken the purpose of the MBS placing the SFH three frames after the primary preamble, such as to make the synchronization more reliable before decoding the SFH. Accordingly, there is a need to address the problems of how to mitigate the interference on SFH and other control channels such as preambles, for different types of FBSs.

Therefore, a need exists to address the issues that arise with the deployment of the Femtocell in a wireless communication system.

### Disclosure of Invention Solution to Problem

An aspect of the present invention is to address at least the above-mentioned problems and/or disadvantages and to provide at least the advantages described below. Accordingly, an aspect of the present invention is to provide techniques for Interference Mitigation (IM) in a multi-tier communication system.

In accordance with an aspect of the present invention, a method for an operation of a mobile station (MS) for use in a wireless communication network comprising a plurality of Base Stations (BSs) capable of communicating with the MS and other Mobile Stations (MSs), wherein at least some of the BSs are Femtocell BSs (FBSs) and at least some of the BSs are Macrocell BSs (MBSs) according to claim 1 is provided.

In accordance with an aspect of the present invention, a method for an operation of a femto cell base station (FBS), for use in a wireless communication network comprising a plurality of BSs capable of communicating with a plurality of MSs, wherein at least some of the BSs are FBSs and at least some of the BSs are Macrocell BSs, according to claim 11 is provided.

In accordance with an aspect of the present invention, an MS, for use in a wireless communication network comprising a plurality of BSs capable of communicating with the MS and other MSs, wherein at least some of the BSs are FBSs and at least some of the BSs are MBSs, according to claim 6 is provided.

In accordance with an aspect of the present invention, an FBS, for use in a wireless communication network comprising a plurality of BSs capable of communicating with a plurality of MSs, wherein at least some of the BSs are FBSs and at least some of the BSs are MBSs, according to claim 14 is provided. Preferred embodiments are subject of the dependent claims.

Other aspects, advantages, and salient features of the invention will become apparent to those skilled in the art from the following detailed description, which, taken in conjunction with the annexed drawings, discloses exemplary embodiments of the invention.

### Brief Description of Drawings

The above and other aspects, features, and advantages of certain exemplary embodiments of the present invention will be more apparent from the following description taken in conjunction with the accompanying drawings, in which:
FIG. 1 illustrates an unauthorized Mobile Station (MS) receiving interference from a Closed Subscriber Group (CSG) Femtocell Base Station (FBS) according the related art;
FIG. 2 illustrates the locations of SuperFrame Headers (SFHs) in a frame structure used by FBSs and Macrocell Base Stations (MBSs) according to the related art;
FIG. 3 illustrates an unauthorized MS reporting interference during network entry according to an exemplary embodiment of the present invention;
FIG. 4 illustrates an un-connected unauthorized MS ranging a CSG FBS according to an exemplary embodiment of the present invention;
FIG. 5 illustrates a message flow for an unauthorized MS to request Interference Mitigation (IM) from a CSG FBS with an authentication/authorization and key exchange procedure according to an exemplary embodiment of the present invention;
FIG. 6 illustrates a message flow for an unauthorized MS to request IM from a CSG FBS using a Cipher-based Media Access Control (CMAC) according to an exemplary embodiment of the present invention;
FIG. 7 illustrates a message flow for an unauthorized MS to request IM from a Base Station (BS) using a CMAC according to an exemplary embodiment of the present invention;
FIG. 8 illustrates broadcast channel resource allocation for different types of BSs according to an exemplary embodiment of the present invention;
FIG. 9 illustrates channel resource reservation by a CSG-closed FBS of broadcast channel resources used by an MBS according to an exemplary embodiment of the present invention;
FIG. 10 illustrates channel resources of a CSG-closed FBS and a MBS for a synchronization channel according to an exemplary embodiment of the present invention;
FIG. 11 illustrates channel resource reservation by a CSG-closed FBS of resources used by an MBS for a synchronization channel according to an exemplary embodiment of the present invention;
FIG. 12 is a block diagram illustrating an MS in a wireless communication system according to an exemplary embodiment of the present invention; and
FIG. 13 is a block diagram illustrating a BS in a wireless communication system according to an exemplary embodiment of the present invention.

Throughout the drawings, like reference numerals will be understood to refer to like parts, components, and structures.

### Best Mode for Carrying out the Invention

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention described below relate to techniques for Interference Mitigation (IM) in a communication system that includes a Femtocell. It should be understood that the following description might refer to terms utilized in various standards merely for simplicity of explanation. For example, the following description may refer to terms utilized in the Institute of Electrical and Electronics Engineers (IEEE) 802.16m standard or the 3rd Generation Partnership Project (3GPP) Long Term Evolution (LTE) standard. However, this description should not be interpreted as being limited to the IEEE 802.16m or 3GPP LTE standards. Independent of the mechanism used for handoff, it is preferable to perform IM and it is advantageous for that ability to conform to a standardized mechanism.

Herein, the term "Femtocell" may be used interchangeably with the term "Femtocell Base Station (FBS)" and the term "Macrocell" may be used interchangeably with the term "Macrocell Base Station (MBS)." A Mobile Station (MS) may also be referred to as an Advanced Mobile Station (AMS), an MBS may also be referred to as a Macrocell Advanced Base Station (MABS), and a FBS may also be referred to as a Femtocell Advanced Base Station (MABS).

The present disclosure is to support the coexistence of small, low-power BSs and larger BSs, such as MBSs, which may overlay the low-power BSs. Throughout the disclosure, an FBS is used as an example of a small, low-power BS, and an MBS is used as an example of the larger BS that may overlay the smaller BS. All of the exemplary embodiments of the present invention are applicable to any type or size of the BSs in multi-tier networks, where some larger cell may overlay some smaller cells.

Small, low-power cells, such as Femtocells, are different from larger cells, such as Macrocells. The multi-tier network, with BSs of various types and sizes, may have the capability to identify FBSs as well as to distinguish Femtocells from Macrocells. Further, the multi-tier network may have the capability to distinguish an open-access FBS (which allows any compatible mobile station to access) from a Closed Subscriber Group (CSG) FBS (which allows only authorized MS's, i.e., the MS's belonging to this FBS, to access), since some operations, such as, but not limited to, handover, paging, and the like, will be different for FBS and MBSs, and for open-access and CSG FBSs. For example, a MS moving at high speed may not need to handover to any FBS, the open-access FBS may accept the handover requests from the MS while the MS that does not belong to a CSG FBS may not need to send a handover request to that FBS, and so forth.

The exemplary embodiments of the present invention are not limited to Femtocells, despite Femtocells being described herein as examples of small, low-power cells. Examples of other small, low-power cells include picocells, hot zone cells, small relay cells, and the like. In addition, the exemplary embodiments are not limited to Macrocells, despite Macrocells being described herein as an example of larger cells that may cover or overlay smaller cells within the coverage area of the larger cell. The exemplary embodiments of the present invention may be used with any type or sized BS with some level of accessibility differentiation such as being open to all MSs (e.g., an open BS), being open to limited/authorized/subscribed MSs (e.g., a CSG BS), or being open to all MSs but with limited/authorized/subscribed MSs having higher priority and other MSs having lower priority (e.g., a hybrid BS), and so forth. The concept of the CSG is not limited to Femtocells only, but may also be applicable to other BSs, such as microcells, picocells, relays, and the like. The exemplary embodiments of the present invention disclosed in the present application are applicable to any type of the cells with different accessibility control, i.e., an open BS, a CSG BS, or a hybrid BS, despite the CSG FBS being used as an example herein.

In this disclosure, a limited number and types of Base Stations (BSs), a limited number of MSs, or limited use cases may be described as an example. However, the exemplary embodiments of the present invention disclosed herein are also applicable to an arbitrary number and types of BSs, an arbitrary number of MSs, and other related use cases.

### IM

Techniques for supporting fast and effective IM in a multi-tier communication system that includes a Femtocell are described below. The techniques described herein address the problems of how to perform IM when an MS is not connected with any BS, e.g., how to trigger IM, and when to report the interference, etc. Also addressed is the IM problem when the MS detects an interfering Closed Subscriber Group (CSG) FBS for which the MS is unauthorized to access, e.g., by detecting an interference larger than a threshold from the CSG FBS, or by detecting the ratio of the signal strength of the macro BS and the interference from the detected CSG FBS is less than a threshold; or by detecting the Carrier to Interference plus Noise Ratio (CINR) mean is less than a threshold; or by detecting the signal strength of the macro BS is less than the interference from the detected CSG FBS by a threshold; or by detecting the Received Signal Strength Indicator (RSSI) mean (the mean of the received signal strength measurements) of the MBS is less than the RSSI mean from the detected CSG FBS, and such interference prevents the MS from receiving the broadcast channel of other BSs (i.e., MBS or FBS) or decoding the broadcast channel so as to determine where the ranging channel is allocated, in which cases the MS cannot report anything to the other BSs.

In one exemplary embodiment of the present invention, if an MS detects an interfering CSG FBS for which the MS is unauthorized to access, when the MS is to perform ranging to a BS other than the CSG FBS, the MS may report on the interfering CSG FBS or send an IM REQuest (IM-REQ) in a RaNGing REQuest (RNG-REQ) message to the BS to which the MS is ranging in order to request IM.

Upon receiving the RNG-REQ message, which has the IM-REQ included therein, the BS decides whether to negotiate with the CSG FBS via a backhaul to perform IM. The BS and the CSG FBS may have one or multiple ways to coordinate via the backhaul. For example, the BS may contact a network entity such as a Self-Organizing Networks (SON) server, a gateway, or some other entity, so that the network entity can further coordinate with the CSG FBS. As another example, if the BS and the CSG FBS have a direct interface to communicate via the backhaul, then the BS and the CSG FBS may coordinate with each other directly via the backhaul.

The MS may report at least one of a CSG FBS IDentifier (ID), the interference strength, the interference strength at various resources (e.g., carriers, frequency, etc.), the Signal-Interference-Ratio (SIR), CINR, RSSI, etc., in the RNG-REQ message.

If the MS is in an idle mode, and the MS is to range BSs because the MS can no longer detect the BS it was monitoring, the MS may send the report on the interfering CSG FBS or the IM request. If there is a paging message for the MS, the BS may make a request to the CSG FBS via the backhaul that it avoid using the resource (e.g., time, frequency, etc.) to be used for the paging message.

One of the benefits of the above exemplary embodiment is that the interference may be timely mitigated, even before data transmission for the MS begins.

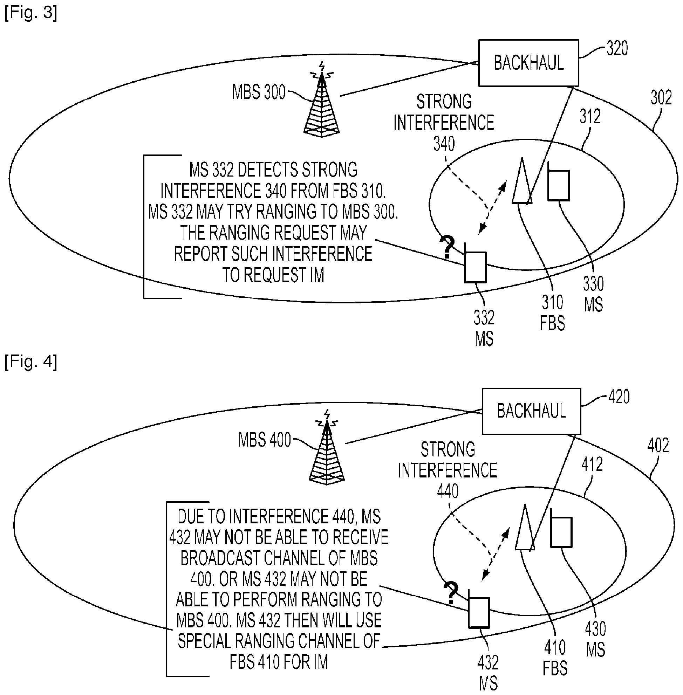

FIG. 3 illustrates an unauthorized MS reporting interference during network entry according to an exemplary embodiment of the present invention.

Referring to FIG. 3, MBS 300 services Macrocell 302. FBS 310 is located in Macrocell 302 and services Femtocell 312. Here, FBS 310 is a CSG FBS. MBS 300 and FBS 310 may communicate with each other via Backhaul 320. MS 330 is authorized to access FBS 310, but MS 332 is not authorized to access FBS 310. As shown, MS 330 is receiving service from FBS 310 as MS 332 enters Femtocell 312. When MS 332 enters Femtocell 312, MS 332 receives a strong signal 340 from FBS 310. However, since MS 332 is unauthorized, the MS will not be able take advantage of the strong signal 340 of the FBS 310 for service. Instead, the signal 340 ends up being strong interference to MS 332. Here, MS 332 detects the strong signal 340 from FBS 310 which is acting as interference. MS 332 may attempt ranging to the MBS 300. The ranging request may include at least one of a report on the interference and to request IM.

The IM-REQ may be at least one of a separate message, information included in a message, and a field of a message. As an extension of the exemplary embodiment described above, an IM-REQ message may be defined that may be sent any time after the ranging succeeds. For example, such message may be sent after the RNG-REQ message, or substantially at the registration time, authentication time, etc. As another example, such message may be sent as part of the RaNGing REQuest (RNG-REQ) message, e.g., by using an assigned value of the ranging purpose indication in the ranging request, wherein the assigned value of the ranging purpose indication indicates the MS is currently experiencing femto interference.

The IM-REQ may include at least one of the CSG FBS ID, the interference strength, the interference strength at various resources (e.g., carriers, frequency, etc.), SIR, CINR, RSSI, and a signal strength difference of a target BS and the interfering CSG BS, etc.

In one exemplary implementation, the IM-REQ may only include a CSG FBS ID. Here, the inclusion of the CSG FBS ID in a message sent to the BS is the request for IM by the corresponding CSG FBS ID.

The IM-REQ may be sent multiple times at different times during network (re)entry, and/or a field for IM-REQ, other than a message type field, may be included in UpLink (UL) messages such as a RNG-REQ message, REGistration-REQ (REG-REQ) message, etc., for one or multiple times. The information in IM-REQ may be updated information. The IM-REQ fields may be dynamically changed. The IM-REQ may also be used for an MS in a connected state.

The CSG FBS may measure, or may be instructed by another BS via the backhaul, to measure the UL interference at the ranging channel of the other BS. If the CSG FBS detects the UL interference from the ranging channel of the other BS, the CSG FBS may adjust one or more of its transmission resources, e.g., by not transmitting anything using that resource or reducing its transmission power.

The IM-REQ may also be jointly coded with a scanning report message sent from the MS, so that only one type of message is needed. However, depending on the purpose, the IM-REQ message and the scanning report message may have different fields.

If the MS is not connected with a BS, the MS may send an Authentication and Authorization Infrastructure (AAI) IM-REQ to the BS before or after the authentication phase so that the BS may negotiate with an interfering CSG FBS to mitigate the interference, so that the MS may complete network entry.

However, if the MS is in an idle mode, and the MS needs to range a BS because the MS can no longer detect the BS it was monitoring, the MS may send a report on the interfering CSG FBS, or the IM-REQ. If there is a paging message for the MS, the BS may request a network entity, such as the interfering CSG FBS or the SON server, to inform the CSG FBS to mitigate the interference, such as by reducing the power on the resource block used for the paging message or avoiding use of the resource (e.g., time, frequency, etc.) to be used for the paging message, via the backhaul.

Hereafter, an example of an IM-REQ message is provided. The IM-REQ message may be an AAI_IM-REQ message. The MS sends the AAI_IM-REQ Media Access Control (MAC) management message during initial network entry or during normal operations in order to request the BS to resolve the interference issue by coordinating with the interfering CSG-closed FBS. The MS may send the AAI_IM-REQ directly to the interfering FBS if the MS cannot reach other BS because of the strong interference from the FBS. The exemplary AAI_IM-REQ message may include one or more of the following information:
- MS ID: This information may be included if the MS has not yet been authenticated. It may not be included when the MS has previously been authenticated. It may not be included if the security rule does not allow an MS ID in this message, hence the MS may have to get into EAP process to convey its MS ID to the BS.
- Authentication Key: This information is included if the MS has not yet been authenticated. It may not be included when the MS has previously been authenticated.
- Num_BS: Number of interfering CSG-closed FBS in the report, which are using a full 48-bit BS ID. For each interfering BS, the information reported may include at least one of a BS ID, a report metric and corresponding fields.
- BS ID: The BS ID of the interfering CSG-closed FBS. Herein, the BS ID may have at least one of a CSG ID, a Cell ID, and a portion of the full BS ID, (such as 12 Least Significant Bits (LSBs) of the full BS ID, 24 LSBs of the full BS ID, 36 Most Significant Bits (MSBs) of the full BS ID, etc.) reported. Here, the CSG ID denotes an ID for the CSG. The Cell ID corresponds to the preamble sequence carried in synchronization channel. The Cell ID can be re-used for Femtocells under a Macrocell coverage. The full BS ID is a full length ID of the BS, which can be used to uniquely identify the BS globally.
- Report metric: Bitmap indicator of the reported interference signal strength. For each bit location, a value of '0' may indicate that the metric is not included, while a value of '1' may indicate that the metric is included in the message. The bitmap interpretation for the metrics may be:
   - Bit 0: BS Carrier to Interference + Noise Ratio (CINR) mean
   - Bit 1: BS Received Signal Strength Indicator (RSSI) mean
   - Bit 2: Relative delay
   - Bit 3: BS Round Trip Delay (RTD)
   - Bits 4-5: Reserved; may be set to zero
- BS CINR mean: The BS CINR Mean parameter may indicate the CINR measured by the MS from the interfering CSG-closed FBS. The value may be interpreted as a signed byte with units of 0.5 dB. The measurement may be performed on the sub-carriers of the frame preamble that are active in the serving BS's segment and averaged over the measurement period.
- BS RSSI mean: The BS RSSI Mean parameter may indicate the Received Signal Strength measured by the MS from the interfering CSG-closed FBS. The value may be interpreted as an unsigned byte with units of 0.25 dB, e.g., 0x00 is interpreted as - 103.75 dBm. An MS may be able to report values in the range -103.75 dBm to -40 dBm. The measurement may be performed on the frame preamble and averaged over the measurement period.
- Relative delay: This parameter may indicate the delay of neighbor DownLink (DL) signals relative to the serving BS, as measured by the MS for the particular BS. The value may be interpreted as a signed integer in units of samples.
- BS RTD: The BS RTD parameter may indicate the RTD measured by the MS from the serving BS. RTD may be given by the latest time advance taken by MS. The value may be interpreted as an unsigned byte with units of 1/Fs.

As an extension of the exemplary embodiment described above, an IM ReSPonse (IM-RSP) may be sent from a BS to respond to the IM-REQ. The IM-RSP may include an indication of accept, reject, retransmit, etc. The IM-RSP may be at least one of an independent message, information included in another message, and a field included in another message. For example, The IM-RSP may be jointly coded with other messages, or may be transmitted as part of other messages.

Hereafter, an example of an IM-RSP message is provided. The IM-RSP message may be an AAI_IM-RSP message. The BS sends the AAI_IM-RSP MAC management message in response to the AAI_IM-REQ message, in which case only an Action Code field may be included. The BS may also send the AAI_IM-RSP message after negotiating with the interfering BS, in which case more information fields may be included.

The Action Code field may be occupied with one of the following values:
- 0b00: Denotes that the IM request is accepted.
- 0b01: Denotes that the IM request is rejected, and that the MS should not retransmit the IM request. Alternatively, this value may be reserved.
- 0b10: Denotes that negotiation with the interfering BS failed, and the MS should not retransmit the request. Alternatively, this value may be reserved.
- 0b11: Denotes that the report should be retransmitted. Alternatively, this value may be reserved.

In an exemplary embodiment of the present invention, a CSG FBS reserves a special/ default/pre-reserved ranging channel, to enable an unauthorized MS to range it for the purpose of IM. If an MS detects an interfering CSG FBS for which the MS is unauthorized to access, and such interference prevents the MS from receiving the broadcast channel of other BSs, or prevents decoding of the broadcast channel to determine where the ranging channel is allocated, then the unauthorized MS may range the CSG FBS at the pre-reserved ranging channel for IM.

In the ranging process, the unauthorized MS may report the received signal strength from the CSG FBS, so that the CSG FBS may estimate whether the MS is in the FBS's coverage area, and to decide whether to adjust the DL power. The unauthorized MS may request the FBS to perform IM, e.g., may request the FBS to reduce the DL power by several dB.

The CSG FBS may request the MS to send more information, such as an MS ID, or the MS may send its MS ID without the CSG FBS requesting the MS ID. The MS ID may be used by the CSG FBS to judge whether the MS is an authorized but a legal MS, and the CSG FBS may decide whether to accept the IM request accordingly.

One of the benefits of the exemplary embodiments described herein are that the generation of a coverage hole to unauthorized MSs by a CSG FBS may be mitigated.

FIG. 4 illustrates an un-connected unauthorized MS ranging a CSG FBS according to an exemplary embodiment of the present invention.

Referring to FIG. 4, MBS 400 services Macrocell 402. FBS 410 is located in Macrocell 402 and services Femtocell 412. Here, FBS 410 is a CSG FBS. MBS 400 and FBS 410 may communicate with each other via a Backhaul 420. MS 430 is authorized to access FBS 410 and MS 432 is not authorized to access FBS 410. As shown, MS 430 is receiving service from FBS 410 as MS 432 enters Femtocell 412. When MS 432 enters Femtocell 412, MS 432 receives a strong signal 440 from FBS 410. However, since MS 432 is unauthorized, the MS will not be able take advantage of the strong signal 440 of the FBS 410 for service. Instead, the signal ends up being strong interference to MS 432. Here, due to the interference, MS 432 may not be able to receive the broadcast channel of MBS 400, or MS 432 may not be able to perform ranging to MBS 400. Accordingly, MS 432 will use a special ranging channel of FBS 410 for IM.

As an extension of the exemplary embodiment described above, a CSG FBS pre-reserved ranging channel (e.g., the allocated resource, such as timing, superframe, frame, subframe, symbol, frequency, carrier, tones, etc.) for unauthorized IM, may be a predefined function of the system information, such as the preamble, Cell ID, the information in the broadcast channel, super frame header, etc. Herein, the MS is aware of the predefined function. When the MS receives the system information, the MS will calculate the ranging channel, and send a ranging code on the ranging channel.

The pre-reserved ranging channel may also be explicitly signaled to the MS, e.g., via broadcast channel.

Some ranging codes defined on the CSG FBS pre-reserved ranging channel for unauthorized IM, may be reserved for IM, and other codes may be used for regular ranging. The reserved ranging code may be calculated by a pre-defined function of the system information, such as the preamble, Cell ID, the information in the broadcast channel, super frame header, etc. Herein, the MS is aware of the predefined function. When the MS receives the system information, the MS will calculate the ranging channel, and send a ranging code on the ranging channel.

The pre-reserved ranging channel may also be explicitly signaled to the MS, e.g., via a broadcast channel.

As an extension of the exemplary embodiment described above, the unauthorized MS may send a particular signal on the ranging channel so that CSG FBS may recognize that signal as an IM-REQ. Herein, the special signal may be implemented using one or more particular patterns. For example, the unauthorized MS may send a reserved code on a reserved ranging channel, repeatedly. In another example, the unauthorized MS may send a ranging code on a reserved ranging channel, with maximum power, repeatedly.

In one exemplary embodiment of the present invention, an indicator may be used in the ranging request message to indicate that the ranging is for the purpose of the MS to request the interfering CSG FBS to perform IM. Here, the ranging request may include at least one of the MS ID and the authentication information of MS, so that CSG FBS may determine if the MS is an unauthorized but otherwise legal system user. The ranging request may also include the strength of the signal from interfering CSG FBS, as measured by the MS.

Strong interference from a CSG FBS the MS is unauthorized to access may saturate or block the MS radio receiver, such that the MS may not be able to maintain communication with a serving BS. If an MS is strongly interfered by a neighbor CSG-closed FBS and the MS cannot receive any service from the network, the MS may request the BS to mitigate the interference by sending the Advanced Air Interface (AAI)_RNG-REQ message. The terms AAI_RNG-REQ and RNG-REQ in this disclosure are interchangeable.

Parameters for an AAI_ RNG-REQ message according to an exemplary embodiment of the present invention are shown below in Table 1.

### Table 1

### [Table 1]

**Table 1**

| **Name** | **Value** | **Usage** |
|---|---|---|
| MS Random | MS may generate a random number MS_Random which may be used for BS to distinguish MSs when more than one MS send AAI_ RNG-REQ message at the same time. | It may be included when the MS is attempting network entry without its ST ID which the BS assigns |
| MAC version | Version number of IEEE 802.16 supported by the MS | |
| Ranging Purpose Indication | The presence of this item in the message may indicate the following MS action: | It may be included when the MS is attempting to perform (re)entry, HO, IM, or location update |
| | If Bit#0 is set to 1, in combination with a serving BS ID, it may indicate that the MS is currently attempting unprepared HandOver (HO). | |
| | If Bit#1 is set to 1, in combination with a PC ID, it may indicate that the MS is attempting network reentry from idle mode to the BS. | |
| | If Bit#2 is set to 1, it may indicate that the MS is currently attempting prepared HO. | |
| | If Bit#3 is set to 1, it may indicate that the MS is initiating the idle mode location update process. | |
| | Bit#4: ranging request for emergency call setup. When this bit is set to 1, it may indicate MS action of Emergency Call process. | |
| | Bit#5: ranging request for IM When this bit is set to 1, it may indicate the MS is overwhelmed by this BS, but cannot access this CSG-closed BS. Bit#6-7: reserved. | |
| Serving BS ID | The BS ID of the serving BS to which the MS is currently connected (has completed the registration cycle and is in normal operation). The serving BS ID may not be included if the aging timer is timed-out (serving BS ID AGINGTIMER). Inclusion of serving BS ID in the AAI_RNG-REQ message may signal to the target BS that the MS is currently connected to the network through the serving BS and is in the process of HO network reentry. | It may be included when the MS is attempting to perform HO reentry |
| Previous ST ID | The ST ID that the MS may use with the previous serving BS. | It may be included when the MS is attempting to perform unprepared HO reentry |
| PC ID | The PC ID that the MS may currently maintain in idle mode. | It may be included when the MS is attempting to perform reentry or location update |
| Temporary ID | The temporary ID which the MS is assigned for idle mode and currently maintains. | |
| Paging Cycle Change | PAGING CYCLE requested by the MS | It may be included when the MS in Idle Mode is attempting to change Paging Cycle during Location Update |
| Power Down Indicator | Indicates the MS may be currently attempting to perform location update due to power down. | It may be included when the MS is attempting to perform location update due to power down |
| CMAC_KEY_COUNT | The MS's current value of the CMAC_KEY_COUNT, which may be used to generate the security keys in the target BS. | It may be included during re-entry, secure Location Update or HO |
| | | It may also be included for IM. |
| Cipher-based MAC (CMAC) Tuple | If included, the CMAC Tuple may be the last attribute in the message. | It may be included when the MS is attempting to perform Network Re-Entry from idle mode, Secure Location Update, or HO, if the MS has a CMAC tuple necessary to expedite security authentication. |
| | | It shall also be included for IM. |
| BS RSSI mean | The BS RSSI Mean parameter may indicate the Received Signal Strength measured by the MS from the interfering CSG-closed FBS. The value may be interpreted as an unsigned byte with units of 0.25 dB, e.g., 0x00 is interpreted as -103.75 dBm. An MS may be able to report values in the range -103.75 dBm to -40 dBm. The measurement may be performed on the frame preamble and averaged over the measurement period. | |
| | | It may also be included only for IM. |
| MS ID and Authentication Key | This information may only be included if the MS has not been authenticated yet. It may not be included when the MS has already completed authentication before. It may not be included if the security rule does not allow an MS ID in this message, hence the MS may have to get into EAP process to convey its MS ID to the BS. | |
| | | It may also bc included only for IM. |

In the parameters shown in Table 1 for the AAI_ RNG-REQ message, Ranging Purpose Indication Bit#5 may be set as '1'. The message may include an MS ID and an authentication key. The Ranging Purpose Indication may comprise several bits where one value of the indication serves for one purpose. A specific value can be assigned to the Ranging Purpose Indication to indicate that the MS is experiencing femto interference. Having received this AAI_RNG-REQ message, the CSG-closed FBS may authenticate the MS's IM-REQ and may mitigate the interference.

As an extension of the exemplary embodiment described above, some parameters may be used in a ranging response message sent from the BS to the MS, to respond to the RNG-REQ with an indicator for requesting IM. The parameters may include the indication of at least one of IM accept, IM reject, retransmit, etc., and the same/or similar parameters as in the IM-RPS. Herein, the response message may be jointly coded with other messages, or may be transmitted as part of other messages.

The exemplary embodiments described above are also applicable to an MS that is connected with the network, and are not limited to the MS that is not connected with the network.

### Secure IM

Techniques for supporting efficient and secure IM in a multi-tier communication system that includes a Femtocell are described below. Herein, the techniques address the problems of how to securely perform IM, especially when the MS is not connected with any BS, e.g., how to trigger IM, and when to report the interference, etc. Herein, we also address the IM problem of when the MS detects an interfering CSG FBS for which the MS is unauthorized to access, and such interference prevents the MS from being able to receive the broadcast channel of other BSs or the decoding of the broadcast channel to determine where the ranging channel is allocated, in which cases the MS cannot report anything to other BSs. Some of the techniques described herein may also be applicable to an MS that is connected with a BS.

In one exemplary embodiment of the present invention, if an MS does not have a proper Authentication Key (AK) context to use, the MS may request IM (when needed) from the base station, prior to the authentication/authorization and key exchange procedure. The MS may further send a more detailed IM request which may contain the interference report of the interfering BS, after (or before/during) the authentication/authorization and key exchange procedure.

For example, suppose an MS is not being served by an MBS. In this case, the MS does not have a proper AK context to use.

If an MS is strongly interfered by a neighbor CSG-closed FBS and cannot get any service from the network, the MS may request the BS to mitigate the interference.

The IM-REQ may be sent in any stage prior, during, or right after the authentication/ authorization and key exchange procedure.

The IM-REQ may be a separate message, or embedded in another existing message in a Network Entry (NE) procedure.

The IM-REQ may be indicated as exemplified below. In one example, the MS may send an AAI_RNG-REQ message using a bit, e.g., a Ranging Purpose Indication Bit set as '1', and report interference in the AAI_RNG-REQ message. In another example, a special/reserved ranging channel/code may be used. Alternatively, the MS may use a REG-REQ message after the authentication/authorization and key exchange procedure. In another alternative, the MS may use a Privacy Key Management (PKM) message.

Having received the IM-REQ, the CSG-closed FBS may further allow the MS to enter the authentication/authorization and key exchange procedure and the registration procedure.

If the FBS recognizes that the MS is an unauthorized but otherwise legal user, the FBS may either accept or reject the IM request, depending on the FBS service provider or operator rule. If the FBS determines that the MS is illegal, the FBS rejects any request from MS.

The IM-REQ may be as simple as the use of one bit in any existing message, or a dedicated IM-REQ message may be employed. The IM-REQ may be made together with or separate from the interference report.

The interference report may be a new message, or part of an existing message. Also, the IM response may be a new message or part of an existing message.

An advantage of the above described exemplary embodiment is that the CSG FBS may be prevented from generating a coverage hole to an unauthorized MS.

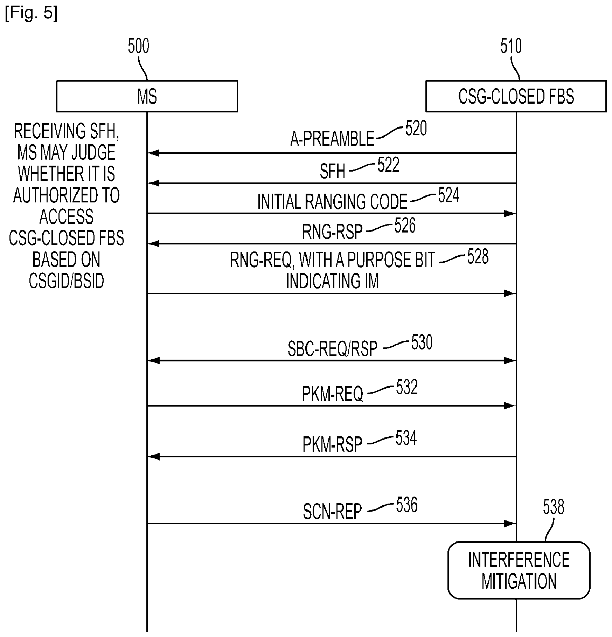

FIG. 5 illustrates a message flow for an unauthorized MS to request IM from a CSG FBS with an authentication/authorization and key exchange procedure according to an exemplary embodiment of the present invention.

Referring to FIG. 5, an Advanced-Preamble (A-Preamble) is sent from CSG FBS 510 to MS 500 in step 520. In step 522, a SuperFrame Header (SFH) is sent from CSG FBS 510 to MS 500. Based on a CSGID/BSID included in the SFH received in step 522, the MS 500 may determine whether it is authorized to access the CSG-FBS 510. In this case, the MS 500 is unauthorized to access CSG FBS 510. In step 524, an initial ranging code is sent to CSG FBS 510 from MS 500. In step 526, an RNG-RSP is sent from CSG FBS 510 to MS 500. In step 528, an RNG-REQ, with a bit indicating a request for IM, is sent from MS 500 to CSG FBS 510. In step 530, an SBC-REQ/RSP is communicated between MS 500 and CSG FBS 510. In step 532, a PKM-REQ is sent from MS 500 to CSG FBS 510. In step 534, a PKM-RSP is sent from CSG FBS 510 to MS 500. In step 536, an SCN-REP is sent from MS 500 to CSG FBS 510. In step 538, the CSG FBS 510 performs IM.

In an exemplary embodiment of the present invention, if an MS that is not authorized to access a CSG-closed FBS has a proper AK context to use, the MS may send a request for IM (when needed, e.g., when the FBS interferes with the MS) to the BS, and the IM request may be transmitted with a CMAC tuple, e.g., in a message containing the CMAC tuple, to the CSG-closed FBS. The MS may further send a detailed IM request which may contain the interference report of the interfering FBS, after (or before/during) the authentication/authorization via the CMAC.

For example, consider the situation where an MS has a proper AK context to use. Here, if the MS is strongly interfered by a neighbor CSG-closed FBS and is unable to receive service from the network, the MS may request the FBS to mitigate the interference.

In contrast, consider the situation where the MS was in an idle/connected state served by an MBS, but has now lost its connection. Here, an IM request may be sent in any stage prior, during or after the ranging procedure. If the MS is in the idle state, the MS may need to use the RNG-REQ to request IM and report interference if the RNG-REQ is the only message sent from MS in idle. Alternatively, new messages for IM may be defined. For example, the IM request may be a separate message, or embedded in another existing message in the NE procedure.

Herein, the RNG-REQ message may contain either a serving BS ID and an ST ID when the MS is in a connected state (in which case parameters are needed for HO) or a Deregistration ID and a PC ID when the MS is in the idle state (in which case parameters are needed for location update), in order for the FBS to recognize which MS sent the messages.

For example, the MS may send an AAI_RNG-REQ message with a bit, e.g., a Ranging Purpose Indication Bit set as '1', or with several bits, e.g., a Ranging Purpose Indication set to a value to indicate the femto interference, and report interference in AAI_RNG-REQ. Herein, a special ranging code/channel may be used for this purpose.

Having received the IM request, and the FBS recognizing that the MS is an unauthorized but otherwise legal user, it is up to the FBS to decide whether to perform IM, depending on the FBS service provider or operator.

The MS may report interference either before or after the authentication. The report may be part of an existing message or included in a new message.

An advantage of the above-described exemplary embodiment is that the CSG FBS may be prevented from generating a coverage hole for an unauthorized MS.

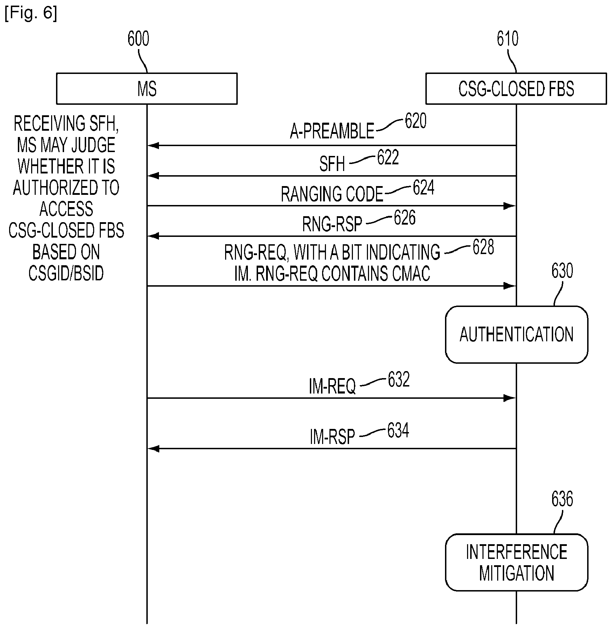

FIG. 6 illustrates a message flow for an unauthorized MS to request IM from a CSG FBS using a CMAC according to an exemplary embodiment of the present invention.

Referring to FIG 6, an A-Preamble is sent from CSG FBS 610 to MS 600 in step 620. In step 622, an SFH is sent from CSG FBS 610 to MS 600. Based on a CSGID/ BSID included in the SFH received in step 622, the MS 600 may determine whether it is authorized to access the CSG-FBS 610. In this case, the MS 600 is unauthorized to access CSG FBS 610. In step 624, a ranging code is sent to CSG FBS 610 from MS 600. In step 626, an RNG-RSP is sent from CSG FBS 610 to MS 600. In step 628, an RNG-REQ, with a bit indicating a request for IM and a CMAC, is sent from MS 600 to CSG FBS 610. In step 630, the CSG FBS 610 performs authentication. In step 632, an IM-REQ is sent from MS 600 to CSG FBS 610. In step 634, an IM-RSP is sent from CSG FBS 610 to MS 600. In step 636, the CSG FBS 610 performs IM.

In one exemplary embodiment of the present invention, if an MS has a proper AK context to use, the MS may make a request for IM (when needed) to the base station, and the IM request may be transmitted with a CMAC tuple, e.g., in a message containing a CMAC tuple. The MS may further send a more detailed IM request which may contain the interference report of the interfering BS, after (or before/during) the authentication/authorization via the CMAC.

For example, consider the situation where the MS has a proper AK context to use. Here, if an MS is receiving strong interference from a neighbor CSG-closed FBS, but the MS can still range another BS, such as an MBS, the MS may request the FBS to mitigate the interference through the MBS. This can happen, for example, when the MS is in an idle/connected state and served by the MBS.

The IM request may be sent to the macro BS in any stage prior, during or after a ranging procedure. If the MS is in an idle state, the MS may then need to use the RNG-REQ to indicate a request for IM and report interference if the RNG-REQ is the only message sent from the MS in the idle state, or new messages for IM may be defined. For example, the IM request may be a separate message, or embedded in another existing message in the NE procedure.

In another example, the MS may send an AAI_RNG-REQ message with a bit, e.g., a Ranging Purpose Indication Bit set as '1', and report interference in an AAI_RNG-REQ message. In another example, a special ranging code/channel may be used for this purpose.

Having received the IM indication, the MBS recognizes that the MS is a legal user and delivers the IM request to the FBS. If the FBS recognizes that the MS is unauthorized, it is up to the FBS to determine whether to perform IM, depending on the FBS service provider or operator.

The MS may report interference either before or after the authentication. The report may be part of an existing message or in a new message. In addition, the IM-RSP may be part of an existing message, e.g., an RNG-RSP message, or a new message.

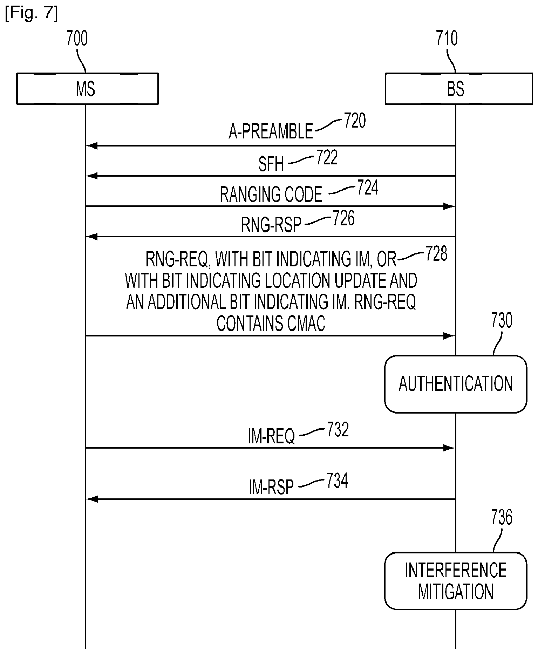

FIG. 7 illustrates a message flow for an unauthorized MS to request IM from a BS using a CMAC according to an exemplary embodiment of the present invention.

Referring to FIG. 7, MS 700 is receiving interference from a CSG FBS that the MS 700 is unauthorized to access. In step 720, an A-Preamble is sent from BS 710 to MS 700. MS 700 is receiving interference from a CSG FBS that the MS 700 is unauthorized to access. In step 722, an SFH is sent from BS 710 to MS 700. In step 724, a ranging code is sent to BS 710 from MS 700. In step 726, an RNG-RSP is sent from BS 710 to MS 700. In step 728, an RNG-REQ, with a bit indicating a location update, a bit indicating a request for IM, and a CMAC, is sent from MS 700 to BS 710. In step 730, the BS 710 performs authentication. In step 732, an IM-REQ is sent from MS 700 to BS 710. In step 734, an IM-RSP is sent from BS 710 to MS 700. In step 736, the BS 710 performs IM.

In an exemplary embodiment of the present invention, if an MS is not connected to any BS and the MS detects interference from a CSG FBS, the MS sends a request for IM to the BS that the MS is monitoring, or to the CSG FBS that is interfering the MS. An indicator in the RNG-REQ message may be used to indicate that the purpose of the ranging is for IM. The MS may report to the BS about the interfering BS in RNG-REQ message, or in a separate message.

The reported items related to the interfering BS may include at least one of signal strength, a BS identification, etc. The MS may also send authentication information, etc.

If an MS in an idle mode determines or elects to request the IM, depending on the security association the MS shares with the preferred BS, the MS uses one of two processes, namely a secure IM request process or an unsecure IM request process. After synchronization with its preferred BS and after receiving a P-SFH, if the MS finds that it does not have the updated information after comparing the system configuration change count, the MS may receive the S-SFH or extended system parameters and system configuration information from the preferred BS.

If the MS shares a valid security context with the preferred BS so that the MS includes a valid CMAC Tuple in the RNG-REQ message, the MS conducts initial ranging with the BS by sending a RNG-REQ message including at least one of a Ranging Purpose Indication TLV set to indicate an IM Request and the CMAC Tuple, PC ID, and information about the interfering BS.

If the BS determines that the CMAC Tuple is valid and supplies a corresponding authenticating CMAC Tuple, the BS replies with an encrypted RNG-RSP message including the IM Response TLV completing the IM process. If a paging group has changed, the BS may include a Paging Group ID in the RNG-RSP message.

If the MS and the BS do not share a current, valid security context, or if the BS for any reason has elected to instruct the MS to use Unsecure IM, the IM shall be processed using the Network Re-Entry procedure from Idle Mode.

Regarding the RNG-REQ message, if the MS is sending the RNG-REQ message to the interfering BS, the MS may not report the BS ID of the current interfering BS, or the MS may set the identification field for the interfering BS to a null value.

For the network reentry from idle mode, the MS may initiate network reentry with the BS by sending a RNG-REQ message including the Ranging Purpose Indication TLV set to indicate network reentry from idle mode and PC ID. If the MS shares a valid security context with the BS so that the MS includes a valid CMAC Tuple in the RNG-REQ message, the MS conducts initial ranging with the BS by sending an RNG-REQ message including the CMAC Tuple. If the BS determines that the CMAC Tuple is valid and supplies a corresponding authenticating CMAC Tuple, then the BS may reply with an encrypted RNG-RSP message. The network reentry procedure may be shortened if the BS possesses the MS's information which may be obtained from a PC or other network entity over a backhaul.

Described below are exemplary embodiments of the present invention described in the context of an IEEE 802.16m communication system.

For the case where an MS has no valid AK context, if the MS is receiving strong interference from a neighbor CSG-closed FBS and the MS cannot receive any service from the network, the MS may request the FBS to mitigate the interference. The MS may send an AAI_RNG-REQ message with a Ranging Purpose Indication Bit#n set as '1'. Having received this request for IM, the CSG-closed FBS may allow the MS to enter the EAP stage for authentication. If the FBS determines that the MS is illegal, the FBS may reject any request from the MS. However, if the FBS determines that the MS is unauthorized to access the FBS but is otherwise a legal user, the FBS may either accept or reject the IM request. Whether to accept or reject the request for IM, depends on the FBS service provider or operator.

In some cases, MS authentication (including the determination of legality and authorization) is completed at the EAP stage. However, in other cases (e.g., user authentication), the determination of legality is only completed at the EAP stage and when the BS receives the MS's MAC address from the MS during a registration procedure. The FBS may determine the authorization of the MS based on the MS's MAC address.

Consider the case where an MS has a valid AK context, the MS is in an idle state and is being served by an MBS, but the MS can no longer receive signals from the MBS due to strong interference from a CSG-closed FBS the MS is unauthorized to access. Here, if the MS is receiving strong interference from a neighboring CSG-closed FBS and cannot receive any service from the network, the MS may request the FBS to mitigate the interference. The MS may send an AAI_RNG-REQ message with a Ranging Purpose Indication Bit#n set as '1', and the CMAC included therein. The FBS may authenticate the request using the MS ID and CMAC. If the FBS determines that the MS is illegal, the FBS may reject any request from MS. However, if the FBS determines that the MS is unauthorized but is otherwise a legal user, the FBS may either accept or reject the IM request. Whether to accept or reject the request for IM, depends on the FBS service provider or operator.

The FBS may authenticate the request using an MS ID (i.e., the network may retrieve the MS's information, based on either a previous ST ID and MBS ID, or a DID and PC ID included in the RNG-REQ message. Based on the MS's information, the network may determine whether the MS is authorized) and CMAC (i.e., the CMAC is used for checking the MS's legality).

If an MS is strongly interfered by a neighbor CSG-closed FBS and the MS cannot receive any service from the network, the MS may request the FBS to mitigate the interference by sending an AAI_RNG-REQ message with a Ranging Purpose Indication Bit#n set as '1', to indicate the IM request. If the MS has a valid AK context, the AAI_RNG-REQ message contains a CMAC tuple.

Having received this message, the CSG-closed FBS may reject the request if the service policy does not allow it. If the service policy allows it, the CSG-closed FBS further authenticates the MS. If the FBS determines that the MS is illegal, the FBS may reject any request from the MS. However, if the FBS determines that the MS is an unauthorized but otherwise legal user, the FBS may either accept or reject the IM request. Whether to accept or reject the request for IM and how to mitigate the interference may be up to the service provider's policy. If the FBS recognizes that the MS is legal and authorized, the FBS may accept the IM request.

### DL Control Channel IM

Techniques for supporting DL control channel IM in a multi-tier communication system that includes a Femtocell are described below. Herein, the techniques address the problems of how to mitigate interference on a broadcast channel such as an SFH and other control channels such as synchronization channels, for different types of BS.

In the exemplary embodiments of the present invention described below, an SFH is referred to as an example of the broadcast channel, and a preamble is referred to as an example of the synchronization channel. Among various systems, these control channels may be referred to using different names. This disclosure is not limited to only broadcast channels and synchronization channels, but it is applicable to all types of DL control channels and DL signaling/messages.

In one exemplary embodiment of the present invention, an open access FBS structures its broadcast channel so that its SFH is in the same place/resource (i.e., default place/resource (e.g., time, frequency, etc.)) as the SFH of the MBS. The CSG?closed FBS structures its broadcast channel such that its SFH is in a resource that is different from the resource where the SFH of the MBS is located. The CSG-open FBS may use a default structure for the broadcast channel in which the SFH is uniformly located in the entire system, or other resources.

If an FBS may use a default resource or other resources, indicators should be used to inform the MS of where the SFH is located. For example, the preambles for the CSG-open FBS may be partitioned, so that one partition of the preambles will be for the SFH in the default mode, and the other partition will be for the SFH in two frames after the primary preambles. Herein, this exemplary embodiment may be applied to any other exemplary embodiment described in this disclosure.

One of the benefits of the exemplary embodiment described above is that the MS operations are the same when the MS moves among an open FBS and an MBS because the SFH of MBS and open FBS are located in the same time resources. This also causes the open FBS to locate the SFH three frames after the primary preamble, similar to the SFH of the MBS, which is three frames after the primary preamble, thereby allowing synchronization to be more reliable before decoding the SFH.

If the MS is not authorized to access any CSG-closed FBS, then the MS does not need to change any operations related to the SFH.

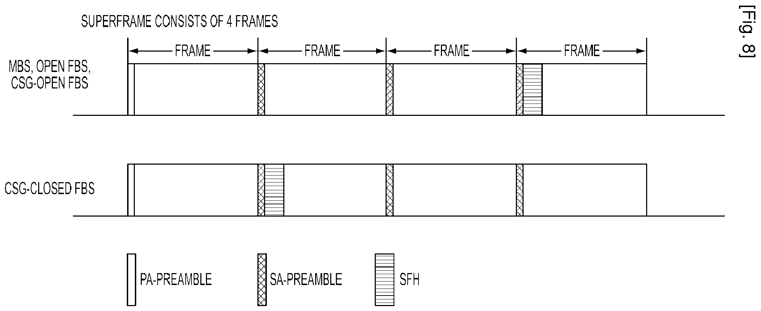

FIG. 8 illustrates broadcast channel resource allocation for different types of BSs according to an exemplary embodiment of the present invention.

Referring to FIG 8, a superframe structure of four frames is shown for an MBS, an open FBS, a CSG-open FBS, and a CSG-closed FBS with the same timing. Each of the MBS, the open FBS, the CSG-open FBS, and the CSG-closed FBS include a Primary Advanced (PA)-Preamble at the start of the first frame of a superframe and a Secondary Advanced (SA)-Preamble at the start of each frame thereafter. Each of the MBS, the open FBS, and the CSG-open FBS include an SFH in the fourth frame immediately after the SA-Preamble and the CSG-closed FBS includes an SFH in the second frame immediately after the SA-Preamble.

In an exemplary embodiment of the present invention, in the default location or allocated resource (e.g., frequency, time, etc.) for the broadcast channel such as the SFH of an MBS, the FBS may puncture its DL channel at the same resource, or reserve (not use) that same resource.

Similarly, the MBS may reserve (not use) the same resource allocated for the broadcast channel, such as the SFH of an FBS.

Herein, a benefit of puncturing is that the interference of the broadcast channel such as SFH of macro and CSG FBS may be avoided.

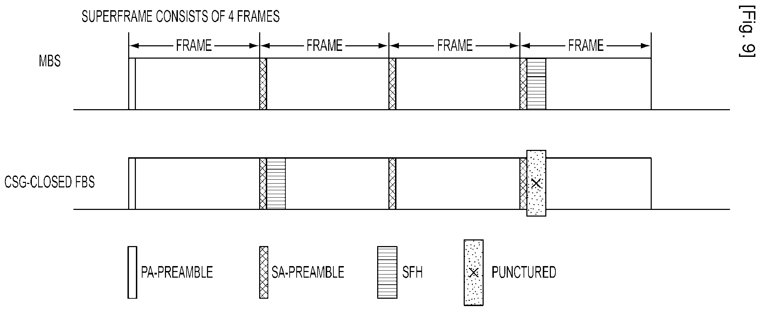

FIG. 9 illustrates channel resource reservation by a CSG-closed FBS of broadcast channel resources used by an MBS according to an exemplary embodiment of the present invention.

Referring to FIG. 9, a superframe structure of four frames is shown for an MBS and a CSG-closed FBS with the same timing. Each of the MBS and the CSG-closed FBS include a PA-Preamble at the start of the first frame of a superframe and a SA-Preamble at the start of each frame thereafter. The MBS includes an SFH in the fourth frame immediately after the SA-Preamble and the CSG-closed FBS includes an SFH in the second frame immediately after the SA-Preamble. In addition, the resources of CSG-closed FBS are punctured at the same resources used by the MBS for its SFH, which in FIG. 9 is in the fourth frame.

In an exemplary embodiment of the present invention, the FBS may schedule DL traffic which may need less transmission power, to be transmitted in the same resources used by the MBS to transmit a broadcast channel, such as the SFH. Alternatively, the FBS may avoid transmissions using the same resources used by the MBS to transmit a broadcast channel, such as an SFH.

The FBS may get the information on the resources used by the MBS to transmit the broadcast channel from a backhaul. Such information may include at least one of resource permutation, resource mapping, resource partitions, etc.

In an exemplary embodiment of the present invention, the synchronization channel, such as the preamble of the FBS may be moved to resources (e.g., time, frequency, etc.) other than the resource used by the preambles of the MBS.

The primary preambles of the FBS may or may not need to be moved to resources other than the resources used for the MBS, for the purpose of synchronization. However, the secondary preambles may be moved. The secondary preambles typically send Cell ID sequences. These synchronization channels may be referred to as different names in different systems.

When the secondary preamble is moved in terms of the resources, the SFH should be moved as well. The SFH may follow the preamble. Since the SFH may have a certain size, and a subframe may also have certain size, the preamble and SFH should be moved together. When the size of one subframe cannot support such a move, then the preamble and SFH may be moved to the following subframe entirely, so that the preamble and the SFH may still be in one subframe. To keep the secondary preamble in each frame the same, all the secondary preambles may be moved to the same place.

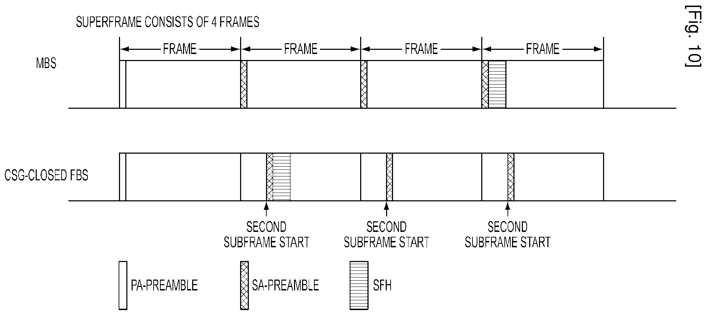

FIG. 10 illustrates channel resources of a CSG-closed FBS and a MBS for a synchronization channel according to an exemplary embodiment of the present invention.

Referring to FIG. 10, a superframe structure of four frames is shown for an MBS and a CSG-closed FBS with the same timing. Each of the MBS and the CSG-closed FBS include a PA-Preamble at the start of the first frame of a superframe and a SA-Preamble in each frame thereafter. The SA-Preamble for the MBS is located at the start of each of the second, third and fourth frames. The SA-Preamble of the CSG-closed FBS is located in each of the second, third and fourth frames so as not to overlap the SA-Preamble and SFH of the MBS. The MBS includes an SFH in the fourth frame immediately after the SA-Preamble and the CSG-closed FBS includes an SFH in the second frame immediately after the SA-Preamble. In addition, the resources of CSG-closed FBS are punctured at the same resources used by the MBS for its SA-Preambles and SFH.

In an exemplary embodiment of the present invention, in the allocated resource (e.g., frequency, time, etc.) for the synchronization channel such as preamble of the MBS, the FBS may puncture its DL channel at the same resource, or reserve (not use) the same resource.

Similarly, the MBS may reserve (not use) the resource allocated for the synchronization channel such as preamble of an FBS. Herein, one of the benefits is that the interference of the synchronization channel, such as preamble of MBS and CSG FBS may be avoided.

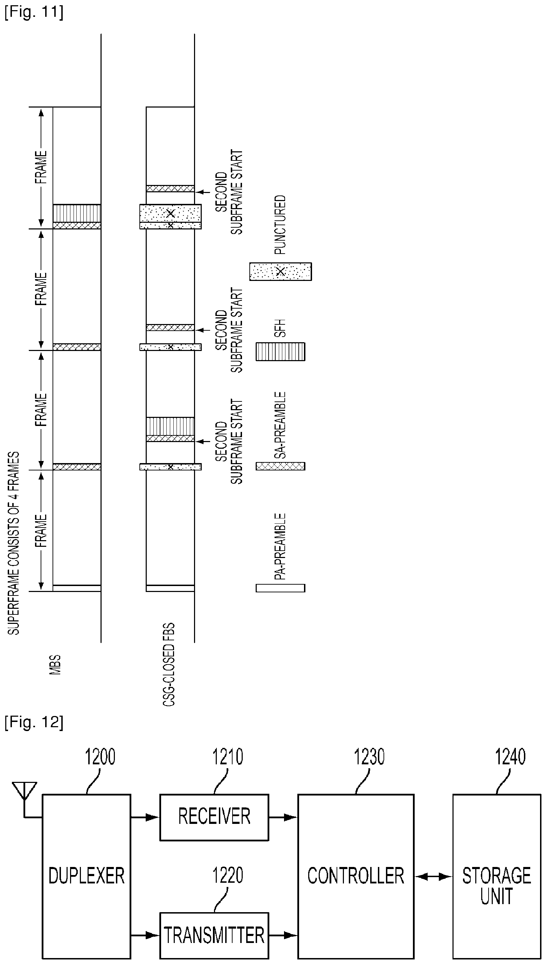

FIG. 11 illustrates channel resource reservation by a CSG-closed FBS of resources used by an MBS for a synchronization channel according to an exemplary embodiment of the present invention.

Referring to FIG. 11, a superframe structure of four frames is shown for an MBS and a CSG-closed FBS with the same timing. Each of the MBS and the CSG-closed FBS include a PA-Preamble at the start of the first frame of a superframe and a SA-Preamble in each frame thereafter. The SA-Preamble for the MBS is located at the start of each of the second, third and fourth frames. The SA-Preamble of the CSG-closed FBS is located in each of the second, third and fourth frames so as not to overlap the SA-Preamble and SFH of the MBS. The MBS includes an SFH in the fourth frame immediately after the SA-Preamble and the CSG-closed FBS includes an SFH in the second frame immediately after the SA-Preamble.

In an exemplary embodiment of the present invention, the FBS may schedule DL traffic which may need less transmission power, to be transmitted in the same resources for the MBS to transmit a synchronization channel, such as an SFH. Alternatively, the FBS may avoid transmission at the same resources used by the MBS to transmit the synchronization channel, such as the SFH header.

The FBS may get the information of the resource used by the MBS to transmit the synchronization channel from the backhaul. Such information may include at least one of resource permutation, resource mapping, resource partitions, etc.

This exemplary embodiment may be extended to other DL control channels and/or broadcast messages, such as resource mapping information (e.g., in IEEE 802.16m, A-MAP), etc.

In an exemplary embodiment of the present invention, if the FBS changes its type, e.g., from a CSG-closed FBS to an open FBS, and if different types of FBS use different resource allocation patterns for DL control channels, such as a broadcast channel, a synchronization channel, etc., the relevant system information and configurations which will be changed because of the FBS type change, and the timing of the actual change, should be broadcasted prior to the actual change, so that MS may have enough time to receive the new configuration of the FBS and be prepared.

The system information/configuration relevant to the FBS type change may include, for example, at least one of Cell ID, the preambles, information in the SFH, etc.

There could be a message, e.g., Femto-Type-Change message that includes the system information/configuration relevant to the FBS type change, and the timing of the actual change. Such a message may be sent as a separate message, as part of another message, or may be carried in broadcast channel such as the SFH. Such a message may be sent via one of a unicast, multicast, and broadcast manner.

The timing of the actual change may be set considering the Idle-mode-cycle of the MS, e.g., the time between the first message of Femto-Type-Change and the actual change can be equal to or longer than the Idle-mode-cycle of MS, so that an MS in idle mode can be made aware of the change prior to the actual change, and adjust itself, such as by monitoring the FBS with a given Cell ID (preamble) after the indicated timing.

There may be one or multiple transition frames which contain multiple repeated messages of Femto-Type-Change message. Alternatively, the new synchronization channels, broadcast channels, or the other DL channels may be repeatedly sent in the transition frames.

Prior to the FBS type change, the FBS may request all MSs in its Femtocell to HO. The system information/configuration relevant to the FBS type change, and the timing of the actual change, may be alternatively sent in a HO command from the FBS to MSs. If there is a field of HO action time in the HO command, the HO action time could be the time of the actual change of the FBS type.

FIG. 12 is a block diagram illustrating an MS in a wireless communication system according to an exemplary embodiment of the present invention.

Referring to FIG. 12, the MS includes a duplexer 1200, a receiver 1210, a transmitter 1220, a controller 1230, and a storage unit 1240. The MS may include any number of additional structural elements. However, a description of additional structural elements of the MS is omitted for conciseness.

The duplexer 1200 transmits a transmission signal provided from the transmitter 1220 via an antenna, and provides a reception signal from the antenna to the receiver 1210 according to a duplexing scheme.

The receiver 1210 converts the reception signal provided from the duplexer 1200 into a baseband signal, and provides the baseband signal to the controller 1230. For example, when the wireless communication system uses an OFDM scheme, the receiver 1210 includes a Radio Frequency (RF) processor, an Analog/Digital Converter (ADC), an OFDM demodulator, and a decoder. Accordingly, the RF processor converts an RF signal provided from the duplexer 1200 into a baseband analog signal. The ADC converts the analog signal provided from the RF processor into digital sample data. The OFDM demodulator transforms sample data in a time domain provided from the ADC into data in a frequency domain by performing a Fast Fourier Transform (FFT). The decoder demodulates and decodes a signal provided from the OFDM demodulator according to a Modulation and Coding Scheme (MCS) level.

The controller 1230 controls overall operations of the MS. The operations of MS include any of the operations explicitly or implicitly described above as being performed by an MS. For example, the controller 1230 may control the receiver 1210 and transmitter 1220, may control detection of an interfering CSG FBS that the MS is not authorized to access, and may control transmission of a request for mitigation of interference.

The transmitter 1220 converts a transmission signal into an RF signal, and provides the RF signal to the duplexer 1200 under control of the controller 1230. For example, when the wireless communication system uses an OFDM scheme, the transmitter 1220 includes an encoder, an OFDM modulator, a Digital/Analog Converter (DAC) and an RF processor. The encoder encodes and modulates a transmission signal according to an MCS level under control of the controller 1230. The OFDM modulator converts data in the frequency domain provided from the encoder into sample data (i.e., an OFDM symbol) in a time domain by performing an Inverse FFT (IFFT). The DAC converts sample data provided from the OFDM modulator into an analog signal. The RF processor converts a baseband analog signal provided from the DAC into an RF signal.

The storage unit 1240 stores programs required for overall operations of the MS and various data, including any of the information and/or the algorithms discussed herein as being received, transmitted, retained or used by an MS.

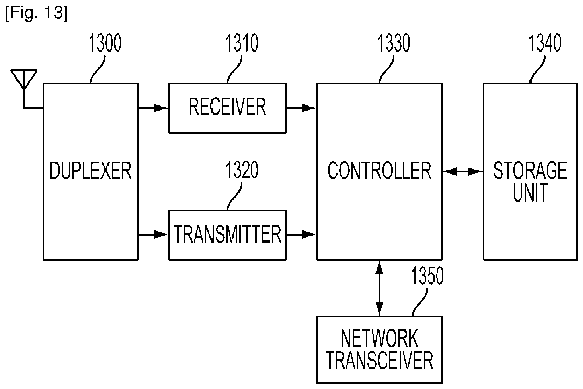

FIG. 13 is a block diagram illustrating a BS in a wireless communication system according to an exemplary embodiment of the present invention.

Referring to FIG. 13, the BS includes a duplexer 1300, a receiver 1310, a transmitter 1320, a controller 1330, a storage unit 1340, and a network transceiver 1350. The BS may include any number of additional structural elements. However, a description of additional structural elements of BS is omitted for conciseness. The BS may be any type of BS including a Relay, a Picocell, a Microcell, a Femtocell, a Ubicell, etc.

The duplexer 1300 transmits a transmission signal provided from the transmitter 1320 via an antenna, and provides a reception signal from the antenna to the receiver 1310 according to a duplexing scheme.

The receiver 1310 converts a reception signal provided from the duplexer 1300 into a baseband signal and provides the baseband signal to the controller 1330. For example, when the wireless communication system uses an OFDM scheme, the receiver 1310 includes an RF processor, an ADC, an OFDM demodulator and a decoder. The RF processor converts an RF signal provided from the duplexer 1300 into a baseband analog signal. The ADC converts the analog signal provided from the RF processor into digital sample data. The OFDM demodulator converts sample data in the time domain provided from the ADC into data in the frequency domain by performing FFT. The decoder demodulates and decodes a signal provided from the OFDM demodulator according to an MCS level.

The controller 1330 controls overall operations of the BS. The operations of the BS include any of the operations explicitly or implicitly described above as being performed by a BS, such as an FBS. For example, the controller 1330 may control the receiver 1310 and the transmitter 1320, may control reception of a request for mitigation of interference, the request originating from an MS that is not authorized to access the FBS, and may control at least one of a reduction of transmission power and a communication with another network entity to cooperate on performing interference mitigation.

The transmitter 1320 converts a transmission signal into an RF signal and provides the RF signal to the duplexer 1300 under control of the controller 1330. For example, when the wireless communication system uses an OFDM scheme, the transmitter 1320 includes an encoder, an OFDM modulator, a Digital/Analog Converter (DAC) and an RF processor. The encoder encodes and modulates a transmission signal according to an MCS level under control of the controller 1330. The OFDM modulator converts data in the frequency domain provided from the encoder to sample data (i.e., an OFDM symbol) in the time domain by performing IFFT. The DAC converts sample data provided from the OFDM modulator into an analog signal. The RF processor converts a baseband analog signal provided from the DAC into an RF signal.

The storage unit 1340 stores programs required for overall operations of the BS and various data including any of the information and/or algorithms discussed herein as being received, transmitted, retained or used by a BS, such as an FBS.

The network transceiver 1350 facilities communication with at least one of other BSs and a core network of a wireless communication system, such as a wireless communication system operating according to the IEEE 802.16m or 3GPP LTE standards. When the BS is an FBS the network transceiver 1350 may be a broadband transceiver.

Certain aspects of the present invention may also be embodied as computer readable code on a computer readable recording medium. A computer readable recording medium is any data storage device that can store data, which can be thereafter read by a computer system. Examples of the computer readable recording medium include Read-Only Memory (ROM), Random-Access Memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for an operation of a mobile station, MS, (432; 500; 600; 700) for use in a wireless communication network comprising a plurality of base stations, BSs, (400, 410; 510; 610; 710) capable of communicating with the MS (432; 500; 600; 700) and other MSs (430), wherein at least some of the BSs are femto cell BSs, FBSs, (410; 510; 610; 710) and at least some of the BSs are macro cell BSs, MBSs, (400) the method comprising:
detecting an interference from at least one inaccessible FBS (410; 510; 610; 710) to which the MS is unauthorized to access; and
transmitting (528; 632; 732), to the at least one inaccessible FBS, a ranging request message comprising a ranging purpose indication for requesting an interference mitigation for the interference,
wherein the interference mitigation is performed by the at least one inaccessible FBS based on information regarding the MS in response to receiving the ranging request message.

2. The method of clam 1, wherein the interference is detected by at least one of the detected interference being over a threshold, the ratio of a signal strength of the serving BS (710) and the interference from the at least one inaccessible FBS (410; 510; 610; 710) being less than a threshold, and the signal strength of the serving BS (710) being less than the interference from the at least one inaccessible FBS (410; 510; 610; 710) by a threshold.

3. The method of clam 1, wherein the interference is detected based on a determination that at least one of a plurality of conditions is met,
wherein the plurality of conditions comprises a detected carrier to interference plus noise ratio, CINR, mean of the serving BS (710) being less than a threshold, and, detected received signal strength indicator, RSSI, mean of the serving BS (710) being less than a RSSI mean of the at least one inaccessible FBS (410; 510; 610; 710).

4. The method of claim 1, wherein the ranging request message comprises an indicator indicating the MS (432; 500; 600; 700) is currently experiencing femto interference.

5. A mobile station, MS, (432; 500; 600; 700) for use in a wireless communication network comprising a plurality of base stations, BSs, (400, 410; 510; 610; 710) capable of communicating with the MS (432; 500; 600; 700) and other MSs (430), wherein at least some of the BSs are femto cell BSs, FBSs, (410; 510; 610; 710) and at least some of the BSs are macro cell BSs, MBSs,(400) the MS comprising:
a transceiver (1210, 1220) configured to receive signals from at least one of the BSs and to transmit signals to the at least one of the BSs; and
at least one processor configured to:
detect an interference from at least one inaccessible FBS (410; 510; 610; 710) to which the MS is unauthorized to access, and
transmit (528; 632; 732), to the at least one inaccessible FBS, a ranging request message comprising a ranging purpose indication for requesting an interference mitigation for the interference,
wherein the interference mitigation is performed by the at least one inaccessible FBS based on information regarding the MS in response to receiving the ranging request message.

6. The MS of claim 5, wherein the interference is detected by at least one of the detected interference being over a threshold, the ratio of a signal strength of the serving BS (710) and the interference from the at least one inaccessible FBS (410; 510; 610; 710) being less than a threshold, and the signal strength of the serving BS (710) being less than the interference from the at least one inaccessible FBS (410; 510; 610; 710) by a threshold.

7. The MS of claim 5, wherein the interference is detected based on a determination that at least one of a plurality of conditions is met,
wherein the plurality of conditions comprises a detected carrier to interference plus noise ratio, CINR, mean of the serving BS (710) being less than a threshold, and, detected received signal strength indicator, RSSI, mean of the serving BS (710) being less than a RSSI mean of the at least one inaccessible FBS (410; 510; 610; 710).

8. The MS of claim 6, wherein the ranging request message comprises an indicator indicating the MS (432; 500; 600; 700) is currently experiencing femto interference.

9. A method for an operation of a femto cell base station, FBS, (410; 510; 610; 710) for use in a wireless communication network comprising a plurality of base stations, BSs,(400, 410; 510; 610; 710) capable of communicating with a plurality of mobile stations, MSs,(430, 432; 500; 600; 700) at least some of the BSs are femto cell BSs, FBSs (410; 510; 610; 710) and at least some of the BSs are macro cell BSs, MBSs,(400) the method comprising:
receiving, from an MS that is unauthorized to access the FBS and detects an interference from the FBS, a ranging request message comprising a ranging purpose indication for requesting an interference mitigation for the interference; and
performing the interference mitigation based on information regarding the MS in response to receiving the ranging request message.

10. The method of claim 9, wherein the performing of the interference mitigation comprises:
controlling at least one of a reduction of transmission power and a communication with another network entity to cooperate on interference mitigation process.

11. The method of claim 9, further comprising:
receiving, from a serving BS communicating with the MS, a request for an interference coordination; and
performing an interference mitigation for the interference in response to the request.

12. A femto cell base station, FBS, (410; 510; 610; 710) for use in a wireless communication network comprising a plurality of base stations, BSs, (400, 410; 510; 610; 710) capable of communicating with a plurality of mobile stations, MSs, (430, 432; 500; 600; 700) at least some of the BSs are femto cell BSs, FBSs, (410; 510; 610; 710) and at least some of the BSs are macro cell BSs, MBSs, (400) the FBS comprising:
a network transceiver (1350) configured to transceive network signals;
a transceiver (1310, 1320) configured to receive signals from at least one MS and to transmit signals to the at least one MS; and
at least one processor (1330) operatively coupled to the network transceiver and the transceiver, configured to:
receive, from an MS that is unauthorized to access the FBS and detects an interference from the FBS, a ranging request message comprising a ranging purpose indication for requesting an interference mitigation for the interference, and
perform the interference mitigation based on information regarding the MS in response to receiving the ranging request message.

13. The FBS of claim 12, wherein the at least one processor is further configured to control at least one of a reduction of transmission power and a communication with another network entity to cooperate on interference mitigation process.

14. The FBS of claim 12, wherein the at least one processor is further configured to receive, from a serving BS communicating with the MS, a request for an interference coordination, and perform an interference mitigation for the interference in response to the request.

## Patentansprüche

1. Verfahren für einen Betrieb einer Mobilstation (MS) (432; 500; 600; 700) zur Verwendung in einem Drahtlos-Kommunikationsnetzwerk umfassend eine Vielzahl von Basisstationen (BS) (400, 410; 510; 610; 710), fähig zum Kommunizieren mit der MS (432; 500; 600; 700) und anderen MS (430), wobei wenigstens einige der BS Femtozellen-BS (FBS) (410; 510; 610; 710) sind und wenigstens einige der BS Makrozellen-BS (MBS) (400) sind, wobei das Verfahren umfasst:
Erfassen einer Interferenz von wenigstens einer unzugänglichen FBS (410; 510; 610; 710), auf welche die MS nicht zugreifen darf; und Senden (528; 632; 732) einer Entfernungsmess-Anforderungsnachricht umfassend eine Entfernungsmess-Zweckangabe zum Anfordern einer Interferenzminderung für die Interferenz an die wenigstens eine unzugängliche FBS,
wobei die Interferenzminderung durch die wenigstens eine unzugängliche FBS auf der Basis einer Information in Bezug auf die MS als Reaktion auf das Empfangen der Entfernungsmess-Anforderungsnachricht durchgeführt wird.

2. Verfahren nach Anspruch 1, wobei die Interferenz dadurch erfasst wird, dass wenigstens eine der erfassten Interferenzen über einer Schwelle liegt, das Verhältnis einer Signalstärke der aktiven BS (710) und der Interferenz von der wenigstens einen unzugänglichen FBS(410; 510; 610; 710) kleiner ist als eine Schwelle und die Signalstärke der aktiven BS (710) kleiner ist als die Interferenz von der wenigstens einen unzugänglichen FBS (410; 510; 610; 710) um eine Schwelle.

3. Verfahren nach Anspruch 1, wobei die Interferenz auf der Basis einer Bestimmung erfasst wird, dass wenigstens eine einer Vielzahl von Bedingungen erfüllt ist,
wobei die Vielzahl von Bedingungen umfasst, dass ein erfasstes mittleres Carrier to Interference plus Noise Ratio (CINR) der aktiven BS (710) kleiner ist als eine Schwelle und dass ein erfasster mittlerer Received Signal Strength Indicator (RSSI) der aktiven BS (710) kleiner ist als ein mittlerer RSSI der wenigstens einen unzugänglichen FBS (410; 510; 610; 710).

4. Verfahren nach Anspruch 1, wobei die Entfernungsmess-Anforderungsnachricht einen Indikator zur Angebe der MS (432; 500; 600; 700) umfasst, die momentan einer Femtointerferenz unterliegt.

5. Mobilstation (MS) (432; 500; 600; 700) zur Verwendung in einem Drahtlos-Kommunikationsnetzwerk umfassend eine Vielzahl von Basisstationen (BS) (400, 410; 510; 610; 710), fähig zum Kommunizieren mit der MS (432; 500; 600; 700) und anderen MS (430), wobei wenigstens einige der BS Femtozellen-BS (FBS) (410; 510; 610; 710) sind und wenigstens einige der BS Makrozellen-BS (MBS) (400) sind, wobei die MS umfasst:
einen zum Empfangen von Signalen von wenigstens einer der BS und zum Senden von Signalen an die wenigstens eine der BS ausgebildeten Sender/Empfänger (1210, 1220); und wenigstens einen Prozessor ausgebildet zum:
Erfassen einer Interferenz von wenigstens einer unzugänglichen FBS (410; 510; 610; 710), auf welche die MS nicht zugreifen darf, und Senden (528; 632; 732) einer Entfernungsmess-Anforderungsnachricht umfassend eine Entfernungsmess-Zweckangabe zum Anfordern einer Interferenzminderung für die Interferenz an die wenigstens eine unzugängliche FBS,
wobei die Interferenzminderung durch die wenigstens eine unzugängliche FBS auf der Basis einer Information in Bezug auf die MS als Reaktion auf das Empfangen der Entfernungsmess-Anforderungsnachricht durchgeführt wird.

6. MS nach Anspruch 5, wobei die Interferenz dadurch erfasst wird, dass wenigstens eine der erfassten Interferenzen über einer Schwelle liegt, das Verhältnis einer Signalstärke der aktiven BS (710) und der Interferenz von der wenigstens einen unzugänglichen FBS(410; 510; 610; 710) kleiner ist als eine Schwelle und die Signalstärke der aktiven BS (710) kleiner ist als die Interferenz von der wenigstens einen unzugänglichen FBS (410; 510; 610; 710) um eine Schwelle.

7. MS nach Anspruch 5, wobei die Interferenz auf der Basis einer Bestimmung erfasst wird, dass wenigstens eine einer Vielzahl von Bedingungen erfüllt ist,
wobei die Vielzahl von Bedingungen umfasst, dass ein erfasstes mittleres Carrier to Interference plus Noise Ratio (CINR) der aktiven BS (710) kleiner ist als eine Schwelle und dass ein erfasster mittlerer Received Signal Strength Indicator (RSSI) der aktiven BS (710) kleiner ist als ein mittlerer RSSI der wenigstens einen unzugänglichen FBS (410; 510; 610; 710).

8. MS nach Anspruch 6, wobei die Entfernungsmess-Anforderungsnachricht einen Indikator zur Angebe der MS (432; 500; 600; 700) umfasst, die momentan einer Femtointerferenz unterliegt.

9. Verfahren für einen Betrieb einer Femtozellen-Basisstation (FBS) (410; 510; 610; 710) zur Verwendung in einem Drahtlos-Kommunikationsnetzwerk umfassend eine Vielzahl von Basisstationen (BS) (400, 410; 510; 610; 710), fähig zum Kommunizieren mit einer Vielzahl von Mobilstationen (MS) (430, 432; 500; 600; 700), wobei wenigstens einige der BS Femtozellen-BS (FBS) (410; 510; 610; 710) sind und wenigstens einige der BS Makrozellen-BS (MBS) (400) sind, wobei das Verfahren umfasst:
Empfangen einer Entfernungsmess-Anforderungsnachricht umfassend eine Entfernungsmess-Zweckangabe zum Anfordern einer Interferenzminderung für die Interferenz von einer MS, die auf die FBS nicht zugreifen darf und eine Interferenz von der FBS erfasst; und
Durchführen der Interferenzminderung auf der Basis einer Information in Bezug auf die MS als Reaktion auf das Empfangen der Entfernungsmess-Anforderungsnachricht.

10. Verfahren nach Anspruch 9, wobei das Durchführen der Interferenzminderung umfasst:
Steuern einer Verringerung der Sendeleistung oder/und einer Kommunikation mit einer anderen Netzinstanz zur Zusammenarbeit beim Interferenzminderungsprozess.

11. Verfahren nach Anspruch 9, ferner umfassend:
Empfangen einer Anforderung zu einer Interferenzkoordination von einer mit der MS kommunizierenden aktiven BS; und
Durchführen einer Interferenzminderung für die Interferenz als Reaktion auf die Anforderung.

12. Femtozellen-Basisstation (FBS) (410; 510; 610; 710) zur Verwendung in einem Drahtlos-Kommunikationsnetzwerk umfassend eine Vielzahl von Basisstationen (BS) (400, 410; 510; 610; 710), fähig zum Kommunizieren mit einer Vielzahl von Mobilstationen (MS) (430, 432; 500; 600; 700), wobei wenigstens einige der BS Femtozellen-BS (FBS) (410; 510; 610; 710) sind und wenigstens einige der BS Makrozellen-BS (MBS) (400) sind, wobei die FBS umfasst:
einen zum Empfangen von Netzsignalen ausgebildeten Netzsender/-empfänger (1350);
einen zum Empfangen von Signalen von wenigstens einer MS und zum Senden von Signalen an die wenigstens eine MS ausgebildeten Sender/Empfänger (1310, 1320); und
wenigstens einen wirksam mit dem Netzsender/-empfänger und dem Sender/Empfänger gekoppelten Prozessor (1330), ausgebildet zum:
Empfangen einer Entfernungsmess-Anforderungsnachricht umfassen eine Entfernungsmess-Zweckangabe zum Anfordern einer Interferenzminderung für die Interferenz von einer MS, die auf die FBS nicht zugreifen darf und eine Interferenz von der FBS erfasst, und
Durchführen der Interferenzminderung auf der Basis einer Information in Bezug auf die MS als Reaktion auf das Empfangen der Entfernungsmess-Anforderungsnachricht.

13. FBS nach Anspruch 12, wobei der wenigstens eine Prozessor ferner zum Steuern einer Minderung der Sendeleistung oder/und einer Kommunikation mit einer anderen Netzinstanz zur Zusammenarbeit beim Interferenzminderungsprozess ausgebildet ist.

14. FBS nach Anspruch 12, wobei der wenigstens eine Prozessor ferner zum Empfangen einer Anforderung zu einer Interferenzkoordination von einer mit der MS kommunizierenden aktiven BS und Durchführen einer Interferenzminderung für die Interferenz als Reaktion auf die Anforderung ausgebildet ist.

## Revendications

1. Procédé d'exploitation d'une station mobile, MS, (432 ; 500 ; 600 ; 700) destinée à être utilisée dans un réseau de communication sans fil comprenant une pluralité de stations de base, BS, (400, 410 ; 510 ; 610 ; 710) capables de communiquer avec la MS (432 ; 500 ; 600 ; 700) et d'autres MS (430), au moins certaines des BS étant des BS de type femto cellule, FBS, (410 ; 510 ; 610 ; 710) et au moins certains des BS étant des BS de type macro cellule, MBS, (400), le procédé comprenant les étapes consistant à :
détecter une interférence provenant d'au moins une FBS inaccessible (410 ; 510 ; 610 ; 710) à laquelle la MS n'est pas autorisée à accéder ; et
transmettre (528 ; 632 ; 732), à la au moins une FBS inaccessible, un message de demande de télémétrie comprenant une indication de volonté de télémétrie pour demander une atténuation d'interférence pour l'interférence,
dans lequel l'atténuation d'interférence est effectuée par la au moins une FBS inaccessible sur la base d'informations concernant la MS en réponse à la réception du message de demande de télémétrie.

2. Procédé selon la revendication 1, dans lequel l'interférence est détectée par au moins l'un parmi l'interférence détectée qui est au-dessus d'un seuil, le rapport entre l'intensité de signal de la BS en service (710) et l'interférence de la au moins une FBS inaccessible (410 ; 510 ; 610 ; 710) qui est inférieur à un seuil, et l'intensité de signal de la BS en service (710) qui est inférieure à l'interférence de la au moins une FBS inaccessible (410 ; 510 ; 610 ; 710) d'un seuil.

3. Procédé selon la revendication 1, dans lequel l'interférence est détectée sur la base d'une détermination qu'au moins une condition parmi une pluralité de conditions est satisfaite,
dans lequel la pluralité de conditions comprend une moyenne de rapport détecté porteuse sur interférence plus bruit, CINR, de la BS en service (710) qui est inférieure à un seuil, et, une moyenne d'indicateur détecté d'intensité de signal reçu, RSSI, de la BS en service (710) qui est inférieure à une moyenne RSSI de la au moins une FBS inaccessible (410 ; 510 ; 610 ; 710).

4. Procédé selon la revendication 1, dans lequel le message de demande de télémétrie comprend un indicateur indiquant que la MS (432 ; 500 ; 600 ; 700) subit actuellement une interférence femto.

5. Station mobile, MS, (432 ; 500 ; 600 ; 700) destinée à être utilisée dans un réseau de communication sans fil comprenant une pluralité de stations de base, BS, (400, 410 ; 510 ; 610 ; 710) capables de communiquer avec la MS (432 ; 500 ; 600 ; 700) et d'autres MS (430), dans laquelle au moins certaines des BS sont des BS de type femto cellule, FBS, (410 ; 510 ; 610 ; 710) et au moins certaines des BS sont des BS de type macro cellule, MBS, (400) la MS comprenant :
un émetteur-récepteur (1210, 1220) configuré pour recevoir des signaux d'au moins une des BS et pour transmettre des signaux vers la au moins une des BS ; et
au moins un processeur configuré pour :
détecter une interférence d'au moins une FBS inaccessible (410 ; 510 ; 610 ; 710) à laquelle la MS n'est pas autorisée à accéder, et
transmettre (528 ; 632 ; 732) à la au moins un FBS inaccessible, un message de demande de télémétrie comprenant une indication de volonté de télémétrie pour demander une atténuation d'interférence pour l'interférence,
dans lequel l'atténuation d'interférence est effectuée par la au moins une FBS inaccessible sur la base d'informations concernant la MS en réponse à la réception du message de demande de télémétrie.

6. MS selon la revendication 5, dans laquelle l'interférence est détectée par au moins l'un parmi l'interférence détectée qui est au-dessus d'un seuil, le rapport entre l'intensité de signal de la BS en service (710) et l'interférence de la au moins une FBS inaccessible (410 ; 510 ; 610 ; 710) qui est inférieur à un seuil, et l'intensité de signal de la BS en service (710) qui est inférieure à l'interférence de la au moins une FBS inaccessible (410 ; 510 ; 610 ; 710) d'un seuil.

7. MS selon la revendication 5, dans laquelle l'interférence est détectée sur la base d'une détermination qu'au moins une condition parmi une pluralité de conditions est satisfaite,
dans laquelle la pluralité de conditions comprend une moyenne de rapport détecté porteuse sur interférence plus bruit, CINR, de la BS en service (710) qui est inférieure à un seuil, et, une moyenne d'indicateur détecté d'intensité de signal reçu, RSSI, de la BS en service (710) qui est inférieure à une moyenne RSSI de la au moins une FBS inaccessible (410 ; 510 ; 610 ; 710).

8. MS selon la revendication 6, dans laquelle le message de demande de télémétrie comprend un indicateur indiquant que la MS (432 ; 500 ; 600 ; 700) subit actuellement une interférence femto.

9. Procédé d'exploitation d'une station de base de type femto cellule, FBS, (410 ; 510 ; 610 ; 710) destinée à être utilisée dans un réseau de communication sans fil comprenant une pluralité de stations de base, BS, (400, 410 ; 510 ; 610 ; 710) capables de communiquer avec une pluralité de stations mobiles, MS, (430, 432 ; 500 ; 600 ; 700), au moins certaines des BS sont des BS de type femto cellule, FBS, (410 ; 510 ; 610 ; 710) et au moins certaines des BS sont des BS de type macro cellule, MBS, (400) le procédé comprenant les étapes consistant à :
recevoir, en provenance d'une MS qui n'est pas autorisée à accéder à la FBS et détecte une interférence provenant de la FBS, un message de demande de télémétrie comprenant une indication de volonté de télémétrie pour demander une atténuation d'interférence pour l'interférence ; et
effectuer l'atténuation d'interférence sur la base d'informations concernant la MS en réponse à la réception du message de demande de télémétrie.

10. Procédé selon la revendication 9, dans lequel la mise en oeuvre de l'atténuation d'interférence comprend :
la commande d'au moins l'une parmi une réduction de puissance de transmission et une communication avec une autre entité de réseau afin de coopérer lors du processus d'atténuation d'interférence.

11. Procédé selon la revendication 9, comprenant en outre les étapes consistant à :
recevoir, à partir d'une BS en service communiquant avec la MS, une demande de coordination d'interférence ; et
effectuer une atténuation d'interférence pour l'interférence en réponse à la demande.

12. Station de base de type femto cellule, FBS, (410 ; 510 ; 610 ; 710) destinée à être utilisée dans un réseau de communication sans fil comprenant une pluralité de stations de base, BS, (400, 410 ; 510 ; 610 ; 710) capables de communiquer avec une pluralité de stations mobiles, MS, (430, 432 ; 500 ; 600 ; 700), au moins certaines des BS sont des BS de type femto cellule, FBS, (410 ; 510 ; 610 ; 710) et au moins certaines des BS sont des BS de type macro cellule, MBS (400), la FBS comprenant :
un émetteur-récepteur de réseau (1350) configuré pour transmettre des signaux de réseau ;
un émetteur-récepteur (1310, 1320) configuré pour recevoir des signaux d'au moins une MS et pour transmettre des signaux à la au moins une MS ; et
au moins un processeur (1330) couplé de manière opérationnelle à l'émetteur-récepteur de réseau et à l'émetteur-récepteur, configuré pour :
recevoir, en provenance d'une MS qui n'est pas autorisée à accéder à la FBS et détecte une interférence provenant de la FBS, un message de demande de télémétrie comprenant une indication de volonté de télémétrie pour demander une atténuation d'interférence pour l'interférence, et
effectuer l'atténuation d'interférence sur la base d'informations concernant la MS en réponse à la réception du message de demande de télémétrie.

13. FBS selon la revendication 12, dans laquelle le au moins un processeur est en outre configuré pour commander au moins l'une parmi une réduction de puissance de transmission et une communication avec une autre entité de réseau afin de coopérer lors d'un processus d'atténuation d'interférence.

14. FBS selon la revendication 12, dans laquelle le au moins un processeur est en outre configuré pour recevoir, à partir d'une BS en service communiquant avec la MS, une demande de coordination d'interférence, et effectuer une atténuation d'interférence pour l'interférence en réponse à la demande.
